(19) Europäisches Patentamt
European Patent Office
Office européen des brevets

(11) **EP 2 630 544 B1**

(12) **EUROPÄISCHE PATENTSCHRIFT**

(45) Veröffentlichungstag und Bekanntmachung des Hinweises auf die Patenterteilung:
**01.10.2014 Patentblatt 2014/40**

(51) Int Cl.:
**G02C 7/06** *(2006.01)*        **G02C 7/02** *(2006.01)*

(21) Anmeldenummer: **11776091.8**

(22) Anmeldetag: **13.10.2011**

(86) Internationale Anmeldenummer:
**PCT/EP2011/005144**

(87) Internationale Veröffentlichungsnummer:
**WO 2012/052133 (26.04.2012 Gazette 2012/17)**

(54) **VERORDNUNGS- UND INDIVIDUALISIERUNGSABHÄNGIGE MODIFIKATION DES TEMPORALEN PERIPHEREN SOLLASTIGMATISMUS UND ANPASSUNG DER OBJEKTABSTANDSFUNKTION AN VERÄNDERTE OBJEKTABSTÄNDE FÜR DIE NÄHE UND/ODER FERNE**

PRESCRIPTION-DEPENDENT AND INDIVIDUALIZATION-DEPENDENT MODIFICATION OF THE TEMPORAL PERIPHERAL NOMINAL ASTIGMATISM AND ADAPTATION OF THE OBJECT DISTANCE FUNCTION TO CHANGED OBJECT DISTANCES FOR NEAR AND/OR FAR VISION

MODIFICATION DÉPENDANT D'UNE PRESCRIPTION ET D'UNE INDIVIDUALISATION DE L'ASTIGMATISME NOMINAL TEMPORAL PÉRIPHÉRIQUE ET ADAPTATION DE LA FONCTION DE DISTANCE À UN OBJET À DES DISTANCES À L'OBJET MODIFIÉES POUR LA VISION DE PRÈS ET/OU DE LOIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.10.2010 DE 102010049168**

(43) Veröffentlichungstag der Anmeldung:
**28.08.2013 Patentblatt 2013/35**

(60) Teilanmeldung:
**14001194.1 / 2 767 862**

(73) Patentinhaber: **Rodenstock GmbH**
**80687 München (DE)**

(72) Erfinder:
• **ALTHEIMER, Helmut**
**87650 Baisweil-Lauchdorf (DE)**
• **KASTER, Robert**
**41749 Viersen (DE)**
• **ZIMMERMANN, Martin**
**85253 Erdweg-Kleinberghofen (DE)**
• **BECKEN, Wolfgang**
**81379 München (DE)**
• **ESSER, Gregor**
**81735 München (DE)**
• **UTTENWEILER, Dietmar**
**82057 Icking (DE)**
• **WELK, Andrea**
**81547 München (DE)**

(74) Vertreter: **Müller-Boré & Partner Patentanwälte PartG mbB**
**Friedenheimer Brücke 21**
**80639 München (DE)**

(56) Entgegenhaltungen:
**WO-A1-2010/084019        DE-A1-102009 005 214**
**FR-A1- 2 894 688**

**Beschreibung**

Aspekte der vorliegenden Erfindung betreffen computerimplementierte Verfahren zum Optimieren und Herstellen eines progressiven Brillenglases, entsprechende Vorrichtungen zum Optimieren und zum Herstellen eines progressiven Brillenglases, entsprechende Computerprogrammerzeugnisse und Speichermedien sowie eine Verwendung eines Brillenglases.

Eine Optimierung eines progressiven Brillenglases erfolgt in der Regel durch Minimierung einer Zielfunktion, in welcher Ziel- bzw. Sollwerte für zumindest eine optische Größe, z.B. Astigmatismus und/oder Brechkraft, oder Ziel- bzw. Sollwerte für zumindest einen Abbildungsfehler, z.B. astigmatischer Fehler und/oder Refraktionsfehler, des progressiven Brillenglases eingehen. Bei der Optimierung des Brillenglases können die individuellen Verordnungswerte (sph, Zyl, Achse, Add, Prisma, Basis), Parameter der individuellen Lage bzw. Anordnung des Brillenglases vor dem Auge des Brillenträgers (z.B. Hornhautscheitelabstand (HSA), Fassungsscheibenwinkel (FSW), Vorneigung bzw. pantoskopischer Winkel), physiologische. Parameter (z.B. Pupillendistanz) berücksichtigt werden. Das progressive Brillenglas kann "online" nach Bestelleingang als Unikat optimiert und berechnet werden.

In DE 10 2008 015 189, DE 10 2009 005 206 oder DE 10 2009 005 214 ist ferner vorgeschlagen worden, die Sollastigmatismusverteilung, auf Basis derer das progressive Brillenglas optimiert wird, mittels einer Transformation eines bestehenden bzw. vorgegebenen Designs (Startdesign, Basisdesign) zu ermitteln. So wird in DE 10 2008 015 189 vorgeschlagen, Sollastigmatismusverteilungen für unterschiedliche Additionen mittels einer Transformation einer vorgegebenen Basis- oder Start-Sollastigmatismusverteilung, welche für eine vorgegebene Basisaddition festgelegt worden ist, zu berechnen. In DE 10 2009 005 206 oder DE 10 2009 005 214 wird vorgeschlagen, mittels einer Manipulation einer vorgegebenen Basis-Sollisoastigmatismuslinie, Sollastigmatismusverteilungen mit unterschiedlichen Breiten des Fern- und/oder des Nahbereichs aus einer vorgegebenen Sollastigmatismusverteilung zu erzeugen. Die in DE 10 2008 015 189, DE 10 2009 005 206 oder DE 10 2009 005 214 beschriebenen Verfahren ermöglichen es, das Verfahren zum Optimieren eines progressiven Brillenglases zu vereinfachen und effizienter und flexibler zu gestalten.

Es ist eine Aufgabe der Erfindung, verbesserte Verfahren zum Optimieren und Herstellen von progressiven Brillengläsern bereitzustellen.

Diese Aufgabe wird durch ein computerimplementiertes Verfahren zum Optimieren eines progressiven Brillenglases mit den Merkmalen des Anspruchs 1 oder des Anspruchs 10, ein Computerprogrammerzeugnis mit den Merkmalen des Anspruchs 18, ein Speichermedium mit darauf gespeichertem Computerprogramm mit den Merkmalen des Anspruchs 19, eine Vorrichtung zum Optimieren eines progressiven Brillenglases mit dem Merkmalen des Anspruchs 20, ein Verfahren zum Herstellen eines progressiven Brillenglases mit dem Merkmalen des Anspruchs 21, eine Vorrichtung zum Herstellen eines progressiven Brillenglases mit dem Merkmalen des Anspruchs 22 und eine Verwendung eines Brillenglases mit den Merkmalen des Anspruchs 23 gelöst.

Ein erster Aspekt der Erfindung betrifft ein computerimplementiertes Verfahren zum Optimieren eines progressiven Brillenglases umfassend die Schritte:

Vorgeben einer Start-Sollastigmatismusverteilung $Ast_{soll_{start}}$ für das progressive Brillenglas;
Ermitteln einer transformierten Sollastigmatismusverteilung $Ast_{soll_{neu}}$ und
Optimieren des progressiven Brillenglases anhand der transformierten Sollastigmatismusverteilung.

Das Ermitteln einer transformierten Sollastigmatismusverteilung $Ast_{soll_{neu}}$ umfasst die Schritte:

Multiplizieren des Werts des maximalen temporalen Sollastigmatismus $max\_Ast_{soll}\_temporal_{start}$ der Start-Sollastigmatismusverteilung $Ast_{soll_{start}}$ mit einem Faktor k:

$$\max\_Ast_{Soll}\_temporal_{neu} = k * \max\_Ast_{Soll}\_temporal_{start},$$

wodurch sich ein abgeänderter maximaler temporaler Astigmatismus. $max\_Ast_{soll}\_temporal_{neu}$ ergibt, wobei der Faktor *k* eine Funktion zumindest eines Verordnungswerts und/oder zumindest eines Parameters des Brillenglases oder dessen Anordnung vor den Augen des Brillenträgers ist; und
Transformieren der Start-Sollastigmatismusverteilung $Ast_{Soll_{start}}$ auf Basis des abgeänderten maximalen temporalen Astigmatismus $max\_Ast_{soll}\_temporal_{neu}$.

Wie bereits oben ausgeführt erfolgt die Optimierung von progressiven Brillengläsern in der Regel durch eine iterative Minimierung einer Zielfunktion, in welcher Ziel-,bzw. Sollwerte für zumindest eine optische Größe (z.B. Astigmatismus und/oder Brechkraft) oder Ziel- bzw. Sollwerte für zumindest einen Abbildungsfehler (z.B. astigmatischer Fehler und/oder Refraktionsfehler) des progressiven Brillenglases eingehen. Der Refraktionsfehler stellt die Differenz des Brechwerts des Brillenglases von dem Brechwert, welcher mittels Refraktionsbestimmung ermittelt wird, dar. Der astigmatische Fehler stellt die Differenz des Astigmatismus des Brillenglases von dem Astigmatismus, welcher mittels Refraktionsbestimmung ermittelt wird, dar. Vorzugsweise handelt es sich dabei um Werte in Gebrauchsstellung des Brillenglases, d.h. unter Berücksichtigung des Systems Brillenglas-Auge. Freiheitsgrad bei der Optimierung der Zielfunktion ist üblicherweise die Pfeilhöhe der Vorder- oder der Rückfläche des Brillenglases oder sowohl der Vorder- als auch der Rückfläche, z.B. bei einem doppelprogressiven Brillenglas.

Eine designbasierte Optimierung eines progressiven Brillenglases kann zum Beispiel durch Minimierung einer Zielfunktion der Form:

$$F(\vec{x}) = \sum_{i=1}^{m} \left[ g_{i,Ast} (Ast_i - Ast_{i,Soll})^2 + ... \right] \qquad (1)$$

oder der Form

$$F(\vec{x}) = \sum_{i=1}^{m} \left[ g_{i,\Delta R} (\Delta R_i - \Delta R_{i,Soll})^2 + g_{i,Ast} (Ast_i - Ast_{i,Soll})^2 + ... \right] \qquad (2)$$

erfolgen.

In den obigen Formeln bezeichnen:

$\Delta R_{i,soll}$     den Sollwert des lokalen Refraktionsfehlers/Brechwerts an der $i$-ten Bewertungsstelle;

$\Delta R_i$     den tatsächlichen lokalen Refraktionsfehler/Brechwert an der $i$-ten Bewertungsstelle;

$Ast_{i,soll}$     den Sollwert des lokalen astigmatischen Fehlers/Astigmatismus an der $i$-ten Bewertungsstelle;

$Ast_i$     der tatsächliche lokale astigmatische Fehler/Astigmatismus an der $i$-ten Bewertungsstelle;

$g_{i,\Delta R}$     die lokale Gewichtung des Refraktionsfehlers/Brechwert an der $i$-ten Bewertungsstelle; und

$g_{i,Ast}$     die lokale Gewichtung des astigmatischen Fehlers/Astigmatismus an der $i$-ten Bewertungsstelle.

Die in die Zielfunktion eingehenden Ist- und Sollwerte der zumindest einen optischen Eigenschaft können sowohl Sollwerte (Flächenwerte oder Werte in Gebrauchstellung) des Brillenglases als auch Sollwerte für zumindest einen Abbildungsfehler sein. Im Sinne dieser Anmeldung wird daher unter dem Begriff "Sollastigmatismus" sowohl der Astigmatismus des Brillenglases (als Flächenbrechwert oder in Gebrauchsstellung) als auch der astigmatische Fehler verstanden. Ebenfalls wird unter dem Begriff "Sollastigmatismusverteilung" im Sinne dieser Anmeldung sowohl die räumliche Verteilung der Sollwerte des Astigmatismus des Brillenglases als auch die räumliche Verteilung der Sollwerte des astigmatischen Fehlers verstanden. Die Sollwerte der zumindest einen optischen Eigenschaft des Brillenglases und insbesondere die Sollwerte des Astigmatismus oder des astigmatischen Fehlers charakterisieren das "Design" eines Brillenglases. Darüber hinaus kann das Brillenglasdesign ein geeignetes Objektabstandsmodell umfassen. Das Objektabstandsmodell kann beispielsweise eine Objektabstandsfunktion, welche als der reziproke Objektabstand entlang der Hauptblicklinie definiert ist, umfassen. Ein standardisiertes Objektabstandsmodel ist z.B. in DIN 58 208 Teil 2 (vgl. Bild 6) angegeben. Das Objektabstandsmodel kann jedoch von diesem standardisierten Objektabstandsmodel abweichen.

Die Sollastigmatismusverteilung, auf deren Basis das progressive Brillenglas optimiert wird, kann mittels einer Transformation eines bestehenden bzw. vorgegebenen Designs (Startdesign, Basisdesign) erhalten werden. So wird z.B. in DE 10 2008 015 189 vorgeschlagen, Sollastigmatismusverteilungen für unterschiedliche Additionen mittels einer Transformation einer vorgegebenen Basis-oder Startsollastigmatismusverteilung, welche für eine vorgegebene Basisaddition festgelegt worden ist, zu erhalten. In DE 10 2009 005 206 oder DE 10 2009 005 214 wird vorgeschlagen, mittels einer Manipulation einer vorgegebenen Basis-Sollisoastigmatismuslinie, Sollastigmatismusverteilungen mit unterschiedlichen Breiten des Fern- und/oder des Nahbereichs aus einer vorgegebenen Sollastigmatismusverteilung zu erzeugen. Die Wirkungsabhängigkeit des Sollastigmatismus kann über unterschiedliche Basisdesigns abgedeckt werden.

Das Startdesign (Basisdesign) weist in der Regel augrund der binokularen Abbildungseigenschaften eine annähernd symmetrische Verteilung des Sollastigmatismus in Bezug auf die Hauptblicklinie auf. Bei einer additions- und/oder wirkungs- und/oder progressionslängenabhängigen Transformation des Startdesigns wird die annähernd symmetrische Verteilung des Sollastigmatismus im Wesentlichen beibehalten.

Gemäß einem ersten Aspekt der Erfindung ist jedoch erkannt worden, dass für bestimmte Kombinationen von Verordnungswerten und/oder Parametern des Brillenglases und/oder dessen Anordnung vor den Augen des Brillenträgers (d.h. dessen Gebrauchsstellung) die oben beschriebene Vorgehensweise, bei welcher die in die Zielfunktion eingehende Sollastigmatismusverteilung annähernd symmetrisch in Bezug auf die Hauptblicklinie ist, zu suboptimalen Ergebnissen führen kann. So sind z.B. die Gradienten der Flächeneigenschaften der progressiven Fläche und/oder die Gradienten der Gebrauchswerte häufig relativ groß. Dies führt zu verschlechterten Gebrauchsstellungseigenschaften des Brillenglases (Astigmatismus und/oder Brechwert in Gebrauchsstellung des Brillenglases).

Diese Nachteile treten insbesondere bei Brillengläsern mit flacher Basiskurve (d.h. mit einer Basiskurve im Bereich von 0 dpt bis 4 dpt) und höheren Rückflächenkrümmungen (d.h. Rückflächenkrümmungen größer oder gleich -6 dpt) auf, insbesondere in Kombination mit:

- hohen Verordnungszylindern, d.h. Zylindern im Bereich von größer oder gleich 2 dpt, und/oder.
- schiefen Achslagen des Verordnungszylinders, d.h. Achslagen des Verordnungszylinders von 0 bis 90° nach Tabo bei rechten Brillengläsern, und von 90 bis 180° bei linken Brillengläsern; und/oder
- geringerer Verordnungsaddition, d.h. eine Addition < 2,0 dpt, vorzugsweise eine Addition $\leq$ 1,5 dpt,

und/oder in Kombination mit größeren Verkippungswinkeln des Brillenglases vor dem Auge, d.h. Verkippungswinkeln im Bereich von größer oder gleich 5°.

Es ist erkannt worden, dass ein Grund für das Auftreten höherer Gradienten der Flächeneigenschaften bei Brillengläsern, welche eine der obigen Kombinationen aufweisen, die symmetrische Verteilung des Sollastigmatismus in Bezug auf die Hauptblicklinie ist. So kann z.B. bei einer torischen Überlagerung einer vorgegebenen Starfläche mit einer torischen oder atorischen Fläche temporal ein astigmatischer Fehler auftreten, welcher teilweise deutlich unter dem Wert des Sollastigmatismus gemäß der symmetrischen Sollastigmatismusverteilung liegt. Der Optimierungsprozess versucht allerdings die symmetrischen Vorgaben für den Sollastigmatismus zu erreichen und "verbiegt" deshalb die zu optimierenden Fläche an dieser Stelle stärker, als dies für niedrige Additionen notwendig wäre.

Gemäß dem ersten Aspekt der Erfindung wird daher vorgeschlagen, den temporalen Sollastigmatismus in der Peripherie des Brillenglases mit einem Faktor $k$ zu multiplizieren, um diesem Umstand Rechnung zu tragen. Der Faktor k nimmt vorzugsweise den Wert 1 an, wenn keine Manipulation der Sollastigmatismuswerte stattfinden soll und einen Wert kleiner als 1 an, wenn die Sollastigmatismuswerte manipuliert werden sollen. Der Faktor $k$ ist eine Funktion zumindest eines Verordnungswerts (wie z.B. Sphäre, Zylinder, Zylinderachse, Prisma, Prismenbasis und/oder Addition) und/oder zumindest eines Parameters des Brillenglases oder dessen Anordnung vor den Augen des Brillenträgers (d.h. dessen Gebrauchsstellung). Die Parameter des Brillenglases und/oder dessen Anordnung vor den Augen des Brillenträgers (d.h. dessen Gebrauchsstellung) sind beispielsweise der Fassungsscheibenwinkel, der Verkippungswinkel, der Hornhautscheitelabstand (HSA), die Vorneigung oder der pantoskopische Winkel, die Pupillendistanz, der Augendrehpunktabstand und/oder andere Parameter. Es kann sich dabei um durchschnittliche (wie z.B. in DIN 58 208 Teil 2 definiert) oder individuell für einen bestimmten Brillenträger ermittelte Werte handeln.

Insbesondere wird vorgeschlagen, den maximalen temporalen Sollastigmatismus $max\_Ast_{Soll}\_temporal_{start}$ (welcher in der Regel in der Peripherie des Brillenglases auftritt) der vorgegebenen Start-Sollastigmatismusverteilung $Ast_{soll,start}$ mit einem Faktor $k$ zu multiplizieren, wodurch sich ein neuer, transformierter, maximaler temporaler Sollastigmatismus $max\_Ast_{soll\_}temporal_{neu}$ ergibt:

$$\text{max}\_Ast_{Soll}\_temporal_{neu} = k * \text{max}\_Ast_{Soll}\_temporal_{start}. \qquad (3)$$

Die Start-Sollastigmatismusverteilung $Ast_{start}$ über das Brillenglas kann die Sollastigmatismusverteilung einer vorgegebenen progressiven Startfläche sein. Alternativ kann ein Sollastigmatismusmodell vorgegeben werden, anhand dessen die Start-Sollastigmatismusverteilung berechnet werden kann. Das Sollastigmatismusmodell kann z.B. das in der DE 10 2008 015 189, DE 10 2009 005 206 oder DE 10 2009 005 214 beschriebene Sollastigmatismusmodell sein. Insbesondere kann der Verlauf einer Hauptlinie sowie der Verlauf zumindest einer Basis-Sollisoastigmatismuslinie parametrisch oder numerisch vorgeben werden. Alle Sollastigmatismuswerte zwischen der Hauptlinie und der Basis-Sollisoastigmatismuslinie sowie alle Sollastigmatismuswerte zwischen der Basis-Sollisoastigmatismuslinie und der Peripherie des Brillenglases können nachfolgend mittels geeigneter Interpolationen (z.B. einer linearen, quadratischen, kubischen Interpolation) der vorgegebenen Sollastigmatismuswerte auf der Hauptlinie und der Basis-Sollisoastigmatismuslinie und gegebenenfalls anderer vorgegebener Werte ermittelt werden, wie in DE 10 2009 005 206 oder DE 10 2009 005 214 beschrieben.

In einem nächsten Schritt wird anhand des neuen, transformierten maximalen temporalen Astigmatismus eine neue, transformierte Sollastigmatismusverteilung $Ast_{soll_{neu}}$ ermittelt. Dabei werden die nasalen Sollastigmatismuswerte bzw. die nasale Sollastigmatismusverteilung vorzugsweise nicht verändert.

Die neue, transformierte Sollastigmatismusverteilung $Ast_{Soll_{neu}}$ kann durch eine Multiplikation aller temporalen Werte des Sollastigmatismus (d.h. aller Sollastigmatismuswerte auf der temporalen Seite der Hauptblicklinie) mit dem Faktor $k$ erhalten werden:

$$Ast_{Soll_{neu}}\_temporal = k * Ast_{Soll\,start}\_temporal . \qquad\qquad (4)$$

Gemäß einem bevorzugten Beispiel wird jedoch die neue, transformierte Sollastigmatismusverteilung $Ast_{Soll_{neu}}$ mittels einer Interpolation der Sollastigmatismuswerte zwischen einer vorgegebenen temporalen Basis-Sollisoastigmatismuslinie (in der Regel die 0,5 dpt Basis-Sollisoastigmatismuslinie) und der Peripherie des Brillenglases erhalten, wobei der abgeänderte Wert des maximalen, temporalen Astigmatismus $max\_Ast_{soll}\_temporal_{neu}$ berücksichtigt wird. Die Druckschriften DE 10 2009 005 206 oder DE 10 2009 005 214 beschreiben jeweils Verfahren (Parallelenkurvenmodell-Verfahren oder Kegelstumpfmodell-Verfahren) zum Berechnen einer Sollastigmatismusverteilung anhand einer vorgegebenen Basis-Sollisoastigmatismuslinie und des maximalen, temporalen Astigmatismus. Die vorgegebene 0,5 dpt Basis- Sollisoastigmatismuslinie kann anhand der Start-Sollastigmatismusverteilung bestimmt werden. Die temporalen Sollastigmatismuswerte zwischen der Hauptlinie und der temporalen Basis-Sollisoastigmatismuslinie werden dabei vorzugsweise nicht verändert. Neben einem geringeren Wert des maximalen temporalen Sollastigmatismus weist die neue, transformierte Sollastigmatismusverteilung in der Regel geringere Gradienten des Sollastigmatismus in der Peripherie auf.

Vorzugsweise umfasst das Transformieren der Start-Sollastigmatismusverteilung $Ast_{Soll_{start}}$ auf Basis des abgeänderten maximalen temporalen Astigmatismus $max\_Ast_{sott}\_temporal_{neu}$ folglich eine Interpolation der Sollastigmatismuswerte zwischen einer vorgegebenen Basis-Sollisoastigmatismuslinie und der Peripherie des Brillenglases unter Berücksichtigung des abgeänderten maximalen temporalen Astigmatismus $max\_Ast_{soll}\_temporal_{neu}$.

Die Optimierungsvorgaben für das Brillenglas, einschließlich der Start-Sollastigmatismusverteilung und der transformierten Sollastigmatismusverteilung $Ast_{Soll_{neu}}$, können in einem geeigneten Koordinatensystem angegeben werden.

Ein beispielhaftes Koordinatensystem ist ein Koordinatensystem in der zu optimierenden objektseitigen oder augenseitigen Fläche des Brillenglases, wobei der Ursprung des Koordinatensystems beispielsweise mit dem geometrischen Mittelpunkt des rohrunden Brillenglases oder mit dem Zentrier- oder Anpaßpunkt des Brillenglases zusammenfällt. Die vertikale (" $y$ ") und horizontale (" $x$ ") Achse liegen in der tangentialen Ebene zu der jeweiligen augenseitigen oder objektseitigen Fläche des Brillenglases in dem geometrischen Mittelpunkt bzw. dem Zentrier- bzw. Anpaßpunkt. Die vertikale Richtung bezieht sich vorzugsweise auf die vertikale Richtung in Gebrauchsstellung des Brillenglases, wobei das Brillenglas beispielsweise in einer durchschnittlichen Gebrauchsstellung (wie z.B. in DIN 58 208 Teil 2 definiert) oder in einer individuellen Gebrauchsstellung angeordnet ist. Vorzugsweise ist das Brillenglas in einer individuellen Gebrauchsstellung angeordnet. In diesem Koordinatensystem gilt $Ast_{Soll_{start}} = Ast_{soll_{start}}(x,y)$ und $Ast_{soll_{neu}} = Ast_{soll_{neu}}(x,y)$.

Es ist selbstverständlich möglich, die räumliche Verteilung der Abbildungsfehler in anderen geeigneten Koordinatensystemen anzugeben.

Insbesondere ist es bevorzugt, die Sollastigmatismuswerte sowie die Optimierungswerte im Koordinatensystem der zu optimierenden Fläche bezüglich der Hauptlinie oder der Hauptblicklinie (wobei auf der Hauptlinie/Hauptblicklinie $u = 0$ gilt) und nicht bezüglich der y - Achse ( $x = 0$ ) anzugeben, d.h. in der Form $Ast_{Soll_{start}} = Ast_{Soll_{start}}(u, y)$, $Ast_{Soll_{neu}} = Ast_{Soll_{neu}}(u, y)$. Werden die Sollwerte bzw. die Optimierungssollwerte in Bezug auf die Hauptlinie vorgegeben, ist es bei einer Änderung der zu berücksichtigenden Gebrauchsstellung des Brillenglases, und insbesondere bei einer Änderung der Pupillendistanz, des Hornhautscheitelabstands, der Vorneigung, des Objektabstandsmodells, etc. ausreichend, lediglich einen Abgleich der Hauptlinie an die veränderte Hauptblicklinie durchzuführen. Die Sollwerte bzw. die Optimierungssollwerte werden dann automatisch angepasst.

Der Faktor $k$, welcher auch als Manipulationsfaktor bezeichnet wird, kann wie folgt berechnet werden:

$$k = (1 - g_{Verordnung} - h) , \qquad\qquad (5)$$

wobei

$g_{Verordnung}$ eine Funktion zumindest eines Verordnungswerts und
$h$ eine Funktion zumindest eines (individuellen) Parameters des Brillenglases oder dessen Anordnung vor den Augen des Brillenträgers ist.

Da die oben genannten Nachteile verstärkt bei Brillengläsern mit flacher Basiskurve und krummer Rückfläche auftreten, können vorzugsweise diese beiden Parameter (d.h. Basiskurve und/oder Krümmung der Rückfläche) durch einen asymptotischen Vorfaktor *v* berücksichtigt werden:

$$k = v * (1 - g_{Verordnung} - h), \qquad\qquad\qquad (6)$$

wobei

$g_{Verordnung}$ eine Funktion zumindest eines Verordnungswerts;
h eine Funktion zumindest eines Parameters des Brillenglases oder dessen Anordnung vor den Augen des Brillenträgers; und
*v* ein Vorfaktor ist, welcher eine Funktion der Verordnung, insbesondere der Fernverordnung (bzw. der Verordnung im Fernbezugspunkt), und/oder der Basiskurve des Brillenglases und/oder der Krümmung der Rückfläche des Brillenglases ist.

Beispielsweise kann der asymptotische Vorfaktor *v* derart festgelegt werden, dass der Manipulationsfaktor *k* nur bei Minusgläsern angewendet wird.

Der Vorfaktor *v* kann eine Doppelasymptotenfunktion der Fernverordnung, und/oder der Basiskurve des Brillenglases und/oder der Krümmung der Rückfläche. des Brillenglases sein. Der Vorfaktor *v* kann zum Beispiel über eine Doppelasymptotenfunktion der Form:

$$v = b + \frac{a}{(1 + e^{c(x+d)^m})} \qquad\qquad\qquad (7)$$

realisiert werden, wobei für *x* z.B. die mittlere Wirkung oder die Sphäre der Fernverordnung eingesetzt werden kann. Für negativ gewählte c entspricht der Wert *b* dem Faktor *k* , und (*b* + *a*)= 1,0, so dass:

$$v = b + \frac{a}{(1 + e^{c(x+d)^m})} = k + \frac{1 - k}{(1 + e^{c(x+d)^m})} \qquad\qquad (7a)$$

gilt.

Es ist jedoch denkbar, die Abhängigkeit des Vorfaktors von der Fernteilverordnung und/oder der Basiskurve und/oder die Krümmung der Rückfläche mittels anderer geeigneter Funktionen zu beschreiben.

Vorzugsweise ist die Funktion $g_{Verordnung}$ eine Funktion des Verordnungsastigmatismus und/oder der verordneten Zylinderachse und/oder der verordneten Addition. Der Verordnungsastigmatismus, die verordnete Zylinderachse und die verordnete Addition sind die vorgegebenen Werte, welche z.B. durch Refraktionsbestimmung von einem Augenoptiker oder einen Augenarzt bestimmt werden. Das Verfahren umfasst dementsprechend vorzugsweise einen Schritt des Erfassens der Verordnungswerte, insbesondere des Verordnungsastigmatismus, und/oder der verordneten Zylinderachse, und/oder der verordneten Addition.

Vorzugsweise wird die Abhängigkeit der Funktion $g_{Verordnung}$ von der Zylinderachsenlage durch den Faktor (durch die Funktion) $f_{(Zylindeachse)}$:

$$f_{(Zylinderachslage)} = a * \sin^3(2 * Zylinderachslage), \qquad\qquad (8)$$

beschrieben, wobei der Parameter *a* vorzugsweise im Bereich von 0,05 bis 1,0, weiter bevorzugt im Bereich 0,3 bis 0,6 liegt, und besonders bevorzugt den Wert 0,4 annimmt.

Die Abhängigkeit der Funktion $g_{verordnung}$ von dem Verordnungsastigmatismus wird vorzugsweise durch den Faktor (durch die Funktion) $f_{(Verordnungsastigmatismus)}$:

$$f_{(Verordnungsastigmatismus)} = \frac{Verordnungsastigmatismus}{b}, \qquad (9)$$

beschrieben, wobei der Parameter $b$ vorzugsweise im Bereich 2 bis 6, und weiter bevorzugt im Bereich 4 bis 6 liegt. Besonders bevorzugt nimmt $b$ den Wert des maximalen Verordnungsastigmatismus an.

Vorzugsweise ist die Funktion $g_{verordnung}$ eine lineare Funktion der Addition, wobei die Abhängigkeit der Funktion $g_{Verordnung}$ durch den Faktor bzw. durch die Funktion $f_{(Addition)}$:

$$f_{(Addition)} = c * Addition + d, \qquad (10)$$

beschrieben werden kann.

Die Gerade der Addition wird vorzugsweise so gewählt, dass für die maximale Verordnungsaddition keine Anpassung stattfindet (d.h. $f_{(Addition_{max})} = 0$) und bei der geringsten erlaubten Addition $f_{(Addition_{min})} = 1,0$ gilt. Vorzugsweise liegt der Geradenparameter c im Bereich zwischen 0 und -1 und weiter bevorzugt im Bereich zwischen -0,75 und -0,3. Besonders bevorzugt nimmt c einen Wert von -0,3636 an. Vorzugsweise liegt der Parameter $d$ im Bereich von 2,0 bis 0, weiter bevorzugt im Bereich zwischen 2 und 1. Besonders bevorzugt nimmt $d$ den Wert 1,2727 an.

Die Funktion $g_{Verordnung}$ wird vorzugsweise durch eine Multiplikation von zumindest zwei der Faktoren bzw. Funktionen $f_{(Zylindeachse)}$, $f_{(Verordnungsastigmatismus)}$ und $f_{(Addition)}$, vorzugsweise durch eine Multiplikation aller drei Faktoren erhalten.

Vorzugsweise ist h eine Funktion des Verkippungswinkels des Brillenglases ($h = f_{(Verkippunkgswinel)}$), vorzugsweise eine Funktion der Form:

$$f_{(Verkippungswinkel)} = \frac{Verkippungswinkel}{g}, \qquad (11)$$

wobei $g$ eine vorgegebene Konstante ist. Da der Einfluss des Verkippungswinkels nicht sehr groß ist, ist $g$ vorzugsweise im Bereich 50 bis 500, weiter bevorzugt im Bereich von 100 bis 300 und besonders bevorzugt beträgt der Wert etwa 200.

Der Verkippungswinkel ist der Winkel, welcher von der horizontalen Tangente der objektseitigen Fläche des Brillenglases an einem vorgegebenen Bezugspunkt und einer horizontalen Referenzgeraden, eingeschlossen wird. Der vorgegebene Bezugspunkt ist der Schnittpunkt des augenseitigen horizontalen Hauptstrahls in Nullblickrichtung des Benutzers mit der objektseitigen Fläche des Brillenglases. Die horizontale Referenzgerade liegt in einer Ebene, welche senkrecht zu dem horizontalen Hauptstrahl in Nullblickrichtung des Brillenträgers ist. Bezüglich der Definition und der Bestimmung des Verkippungswinkels wird auf DE 10 2004 059 448 A1 verwiesen (dort "horizontaler Kippwinkel" genannt). Der Verkippungswinkel ist einer der Parameter der Anordnung des Brillenglases vor den Augen des Brillenträgers.

Anstelle des Verkippungswinkels kann h eine Funktion des Fassungsscheibenwinkels (FSW) sein, vorzugsweise eine Funktion der Form:

$$h = f_{(FSW)} = \frac{FSW}{g}. \qquad (12)$$

Des Weiteren können andere individuelle oder durchschnittliche Parameter der Gebrauchsstellung des Brillenglases, wie z.B. Vorneigung, ebenfalls berücksichtigt werden.

Vorzugsweise wird der Faktor $k$ in Abhängigkeit von der Zylinderachslage, des Verordnungsastigmatismus, der Addition und des Verkippungswinkels oder Fassungsscheibenwinkels berechnet:

$$k = 1 - f_{(Zylinderachslage)} * f_{(Verordnungsastigmatismus)} * f_{(Addition)} - f_{(Verkippungswinkel)}$$

$$(13)$$

oder

$$k = v * (1 - f_{(Zylinderachslage)} * f_{(Verordnungsastigmatismus)} * f_{(Addition)} - f_{(Verkippungswinkel)},$$

$$(14)$$

wobei die einzelnen Faktoren bzw. Funktionen f jeweils nach den Gleichungen (8) bis (12) berechnet werden.

Ein Vorteil eines nach den Formeln (13) oder (14) berechneten Faktors k ist, dass der Faktor $k$ automatisch einen Wert von 1 annimmt, wenn keine Transformation der Start-Sollastigmatismusverteilung stattfinden soll.

Vorzugsweise wird der Faktor $k$ nur bei Verordnungszylinderachslagen von 0 bis 90° nach Tabo bei Angabe in Pluszylinderschreibweise bei rechten Gläsern, bei linken Gläsern bei Achslagen von 90 bis 180° angewendet. Bei Zylinderachslagen in diesen Bereichen treten die oben beschriebenen Nachteile verstärkt auf. Sind die Zylinderachslagen in den anderen Quadranten, so kann die Optimierung des Brillenglases nach dem konventionellen Verfahren (z.B. mit dem in DE 10 2008 015 189 offenbarten Verfahren) unter Berücksichtigung einer symmetrischen Sollastigmatismusvorgabe erfolgen.

Nach der erfolgten Skalierung des temporalen Astigmatismus können die Sollastigmatismuswerte gegebenenfalls weiter skaliert oder transformiert werden. So kann z.B. die Progressionslänge analog zu $f_{(Addition)}$ von der Addition abhängen, wie in DE 10 2008 015 189 beschrieben. Ebenfalls können die Sollastigmatismuswerte in Abhängigkeit von der Addition skaliert werden, wie z.B. in DE 10 2008 015 189 beschrieben. Die Reihenfolge der unterschiedlichen Skalierungen/Transformationen der Start-Sollastigmatismusverteilung kann ebenfalls variieren.

Wie bereits oben ausgeführt, kann die Optimierung des Brillenglases anhand der transformierten Sollastigmatismusverteilung eine Minimierung einer Zielfunktion umfassen, in der die Werte der zuvor ermittelten transformierten Sollastigmatismusverteilung als Zielwerte eingehen. Vorzugsweise umfasst die Optimierung des Brillenglases anhand der transformierten Sollastigmatismusverteilung eine Minimierung einer Zielfunktion der Form:

$$F(\vec{x}) = \sum_{i=1}^{m} \left[ g_{i,Ast} (Ast_i - Ast_{i,Soll_{neu}})^2 + ... \right], \qquad (15)$$

wobei

$Ast_{i,Soll_{neu}}$      den Sollastigmatismuswert der transformierten Sollastigmatismusverteilung $Ast_{Soll_{neu}}$ an der $i$-ten Bewer-tungsstelle;

$Ast_i$      den tatsächliche lokale Astigmatismus an der $i$-ten Bewertungsstelle; und

$g_{i,Ast}$      die lokale Gewichtung des Sollastigmatismuswerts an der $i$-ten Bewertungsstelle

bezeichnen.

In der obigen Formel ist $Ast_{iSoll_{neu}}$ die zuvor ermittelte, transformierte Sollastigmatismusverteilung $Ast_{Soll_{neu}}$ an der jeweiligen $i$-ten Bewertungsstelle.

Ferner bevorzugt geht in die Zielfunktion ebenfalls der Refraktionsfehler/Brechwert $\Delta R$ ein, so dass das Berechnen bzw. Optimieren des Brillenglases eine Minimierung der Zielfunktion:

$$F(\vec{x}) = \sum_{i=1}^{m} \left[ g_{i,\Delta R} (\Delta R_i - \Delta R_{i,Soll_{neu}})^2 + g_{i,Ast} (Ast_i - Ast_{i,Soll_{neu}})^2 + ... \right] \qquad (16)$$

umfasst, wobei

| $\Delta R_{i,Sollneu}$ | den Sollwert des lokalen Refraktionsfehlers/Brechwerts an der $i$-ten Bewertungsstelle; |
| $\Delta R_i$ | den tatsächlichen Wert des lokalen Refraktionsfehlers/Brechwerts an der $i$-ten Bewertungsstelle; und |
| $g_{i,\Delta R}$ | die lokale Gewichtung der Refraktionsfehlers/Brechwerts an der $i$-ten Bewertungsstelle |

bezeichnen.

Die Verteilung des Sollbrechwerts oder des Sollrefraktionsfehlers kann ähnlich wie die Sollastigmatismusverteilung aus einer Start-Sollbrechwertverteilung oder einer Startsollrefraktionsfehlerverteilung ermittelt und durch Multiplikation mit einem Faktor abgeändert werden. Die Verteilung des Sollbrechwerts oder des Sollrefraktionsfehlers kann jedoch ebenfalls anhand der zuvor ermittelten, transformierten Sollastigmatismusverteilung ermittelt werden.

Vorzugsweise erfolgt die Optimierung des Brillenglases in Gebrauchsstellung des Brillenglases. Vorzugsweise werden bei der Optimierung des Brillenglases neben den individuellen Verordnungswerten (Sph, Zyl, Achse, Add, Prisma, Basis), Parameter der individuellen Lage bzw. Anordnung des Brillenglases vor dem Auge des Brillenträgers (z.B. Hornhautscheitelabstand (HSA), Fassungsscheibenwinkel (FSW), Vorneigung bzw. pantoskopischer Winkel) und/oder physiologische Parameter des Brillenträgers (z.B. Pupillendistanz) berücksichtigt. Alternativ können durchschnittliche Parameter der Lage bzw. Anordnung des Brillenglases vor dem Auge des Brillenträgers und/oder durchschnittliche physiologische Parameter des Brillenträgers berücksichtigt werden. Das progressive Brillenglas kann "online" nach Bestelleingang als Unikat optimiert und berechnet werden.

Vorzugsweise umfasst das Verfahren ferner die Schritte:

Erfassen der Verordnungswerte des Brillenglases; und
Erfassen der vorzugsweise individuellen Parameter des Brillenglases und/oder der Anordnung des Brillenglases vor den Augen des Brillenträgers.

Mit der oben beschriebenen Vorgehensweise gemäß dem ersten Aspekt der Erfindung ist es möglich, bei einem bestehenden Gleitsichtglasdesign (Startdesign, Basisdesign) die für die Optimierung nach Zielfunktionen notwendige Sollastigmatismusverteilung für spezielle Wirkungen derart zu manipulieren, dass die Zielvorgabe leichter erreicht werden kann. Somit können die negativen Auswirkungen auf die optimierten Flächen- bzw. Gebrauchsstellungseigenschaften von nicht vorteilhaften Sollwertvorgaben deutlich reduziert werden. Dies verbessert auch direkt die Gebrauchsstellungseigenschaften.

Das Verfahren sowie die entsprechende Vorrichtungen gemäß dem ersten Aspekt der Erfindung eignen sich sowohl für das Erzeugen von Designs bzw. Designvarianten für konventionelle oder wirkungsoptimierte progressive Brillengläser, als auch für das Erzeugen von Designs bzw. Designvarianten für individuell optimierte progressive Brillengläser.

Wie bereits oben ausgeführt erfolgt die Optimierung von progressiven Brillengläsern in der Regel durch Minimierung einer Zielfunktion, in welcher Ziel- bzw. Sollwerte für zumindest eine optische Größe (z.B. Astigmatismus und/oder Brechkraft) oder Ziel- bzw. Sollwerte für zumindest einen Abbildungsfehler (z.B. astigmatischer Fehler bzw. astigmatische Abweichung und/oder Refraktionsfehler) des progressiven Brillenglases eingehen. Die in die Zielfunktion eingehenden Ziel- bzw. Sollwerte der zumindest einen optischen Eigenschaft oder des zumindest einen Abbildungsfehlers charakterisieren das Design eines Brillenglases. Darüber hinaus kann das Brillenglasdesign ein geeignetes. Objektabstandsmodell umfassen. Das Objektabstandsmodell kann beispielsweise eine Objektabstandsfunktion, welche als der reziproke Objektabstand entlang der Hauptblicklinie definiert ist, umfassen. Ein standardisiertes Objektabstandsmodel ist z.B. in DIN 58 208 Teil 2 (vgl. Bild 6) angegeben. Das Objektabstandsmodel kann jedoch von diesem standardisierten Objektabstandsmodel abweichen.

Unter einer Hauptblicklinie wird die Folge der Durchstoßpunkte der Hauptstrahlen durch die jeweilige Brillenglasfläche beim Blick auf eine Linie verstanden, welche in der senkrechten Ebene liegt, welche den Abstand der beiden Augendrehpunkte halbiert (sog. Zyklopenaugenebene). Bei der Brillenglasfläche kann es sich um die objekt- oder die augenseitige Fläche handeln. Die Lage der Linie in der Zyklopenaugenebene wird durch das gewählte Objektabstandmodell bestimmt.

Unter einer Hauptlinie wird eine im Wesentlichen gerade oder gewunden verlaufende Linie verstanden, entlang welcher die gewünschte Zunahme des Brechwerts des Brillenglases vom Fern- zum Nahteil erreicht wird. Die Hauptlinie verläuft im Wesentlichen mittig zu dem Brillenglas von oben nach unten, d.h. entlang einer im Wesentlichen vertikalen Richtung. Die Hauptlinie stellt somit eine Konstruktionslinie im Koordinatensystem der zu optimierenden objektseitigen oder augenseitigen Fläche zur Beschreibung der Sollwerte dar. Der Verlauf der Hauptlinie des Brillenglases wird so gewählt, dass sie zumindest in etwa der Hauptblicklinie folgt. Ein Verfahren zum Anpassen der Hauptlinie an die Hauptblicklinie wird z.B. in EP 1 277 079 A2 beschrieben.

Die Objektabstandsfunktion (d.h. der reziproke Objektabstand an der Hauptblicklinie) spielt eine wesentliche Rolle bei der Designfestlegung und Optimierung von progressiven Brillengläsern. So wird nach dem Satz von Minkwitz bei weitestgehender Vollkorrektion die Grundcharakteristik eines progressiven Brillenglases in der Umgebung der Hauptblicklinie vorwiegend durch den Verlauf der Objektabstandsfunktion $A_1(y)$ entlang der Hauptblicklinie bestimmt.

Es ist ferner möglich, eine automatische Anpassung der Objektabstandsfunktion an veränderte Objektabstände oder an ein verändertes Objektabstandsmodell durchzuführen.

Ein beispielhaftes computerimplementiertes Verfahren umfasst die Schritte:

Vorgeben einer Start-Objektabstandsfunktion $A_{1G}(y)$,
Erfassen von Objektentfernungsdaten, wobei die Objektentfernungsdaten eine Objektentfernung in zumindest einem vorgegebenen Punkt auf der Hauptblicklinie umfassen;
Abändern oder Transformieren der Start-Objektabstandsfunktion in Abhängigkeit von den erfassten Objektentfernungsdaten; und
Optimieren des progressiven Brillenglases, wobei bei der Optimierung des Brillenglases die abgeänderte/transformierte Objektabstandsfunktion berücksichtigt wird.

Das Abändern/Transformieren der Start-Objektabstandsfunktion $A_{1G}(y)$ umfasst ein Überlagern der Start-Objektabstandsfunktion $A_{1G}(y)$ mit einer Korrekturfunktion $A_{1Korr}(y)$:

$$A_1(y) = A_{1G}(y) + A_{1Korr}(y). \qquad (17)$$

Die Objektabstandsfunktion gibt den reziproken Objektabstand (die reziproke Objektentfernung) entlang der Hauptblicklinie als Funktion der vertikalen Koordinate y wieder. Anders ausgedrückt ist die Objektabstandsfunktion als der reziproke Objektabstand (die reziproke Objektentfernung) entlang der Hauptblicklinie definiert.

Die Korrekturfunktion weist zumindest einen variablen Parameter auf, welcher derart in Abhängigkeit von den erfassten Objektentfernungsdaten bestimmt wird, dass der Wert der abgeänderten Start-Objektabstandsfunktion in zumindest einem vorgegebenen Punkt gleich dem reziproken Wert der erfassten Sollobjektentfernung für diesen Punkt ist. Mit anderen Worten wird der zumindest eine variable Parameter (Koeffizient) der Korrekturfunktion derart in Abhängigkeit von den erfassten Objektabstandsdaten bestimmt oder festgelegt, dass die Bedingung:

$$A_1(y = y_D) = A_{1D}, \qquad (18)$$

erfüllt wird, wobei in der obigen Formel:

$A_{1D}$ den reziproken Wert der erfassten Sollobjektentfernung bzw. des erfassten Sollobjektabstands in dem zumindest einen vorgegebenen Punkt D auf der Hauptblicklinie, wobei der Punkt D eine vertikale Koordinate $y_D$ aufweist; und
$A_1(y=y_D)$ den Wert der Objektabstandsfunktion $A_1(y)$ im vorgegebenen Punkt D auf der Hauptblicklinie bezeichnen.

Dabei kann das Koordinatensystem ein beliebiges Koordinatensystem sein, insbesondere eines der zuvor beschriebenen Koordinatensysteme {x, y} oder {u,y}, wobei $u$ den Abstand von der Hauptblicklinie oder Hauptlinie darstellt. In einem Koordinatensystem {x, y} gilt für die Punkte auf der Hauptblicklinie $(x = x_{HBL} = x_0, y)$. In einem Koordinatensystem {u, y} der Hauptblicklinie gilt für die Punkte auf der Hauptblicklinie $(u = 0, y)$.

Vorzugsweise umfassen die Objektentfernungsdaten zumindest eine Sollobjektentfernung $A_{1Ferne}$ in einem vorgegeben Fernbezugspunkt (Designpunkt Ferne) DF auf der Hauptblicklinie und eine Sollobjektentfernung $A_{1Nähe}$ in einem vorgegebenen Nahbezugspunkt (Designpunkt Nähe) DN auf der Hauptblicklinie. Der zumindest eine variable Parameter der Korrekturfunktion wird derart bestimmt oder festgelegt, dass der jeweilige Wert der abgeänderten Start-Objektabstandsfunktion im Fern- und/oder Nahbezugspunkt gleich dem entsprechenden reziproken Wert der erfassten Sollobjektentfernung für den Fern- und/oder Nahbezugspunkt ist.

Anders ausgedrückt umfassen in diesem Fall die Objektentfernungsdaten eine Sollobjektentfernung für den Fernbezugspunkt DF und eine Sollobjektentfernung für den Nahbezugspunkt DN. Der Fernbezugspunkt befindet sich auf der Hauptblicklinie auf einer vertikalen Höhe $y_{DF}$. Der Nahbezugspunkt befindet sich auf der Hauptblicklinie auf einer vertikalen Höhe $y_{DN}$. Der zumindest eine variable Parameter der Korrekturfunktion wird derart festgelegt, dass die Bedingungen:

$$A_1(y = y_{DF}) = A_{1Ferne} \, ,$$

$$A_1(y = y_{DN}) = A_{1Nähe} \qquad\qquad (19)$$

erfüllt sind, wobei

$A_{1Ferne}$ den reziproken Wert der Sollobjektentfernung im Fernbezugspunkt *DF,* und
$A_{1Nähe}$ den reziproken Wert der Sollobjektentfernung im Nahbezugspunkt *DN,* bezeichnen.

Die Start-Objektabstandsfunktion, nachfolgend auch Grund-Objektabstandsfunktion oder Grundfunktion genannt, $A_{1G}(y) = A_{1G}(x = x_0, y) = A_{1G}(u = x_0, y)$ kann eine beliebige analytische Funktion oder auch eine Interpolationsfunktion (z.B. Splinefunktion) sein. Ebenfalls kann $A_{1G}(y)$ punktweise vorgegeben werden.

Die Start-Objektabstandsfunktion kann beispielsweise analytisch mittels einer Doppelasymptotenfunktion der Form:

$$A_{1G}(y) = DAS_G(y) = b_G + \frac{a_G}{(1 + e^{c(y+d)})^m} \qquad\qquad (20)$$

mit den Parametern/Variablen $a_G, b_G, c, d, m$ beschrieben werden.

Eine Doppelasymptotenfunktion weist insbesondere folgende vorteilhafte Eigenschaften auf:

- Die beiden Asymptoten nehmen jeweils entsprechend die Werte $b_G$ und $(b_G + a_G)$ an*;*
- Mit dem variablen Parameter *d* kann die vertikale Position gesteuert werden. Vorzugsweise liegt der Parameter *d* im Bereich -10 < *d* < 10, weiter bevorzugt im Bereich -8 < *d* < 5;
- Je größer der Betrag des variablen Parameters *c* desto schneller erfolgt der Übergang von einer zur anderen Asymptote. Der Parameter *c* wird vorzugsweise derart ausgewählt, dass |*c*| < 1,5;
- Der Parameter *m* (*m* > 0) beschreibt die Asymmetrie der Funktion. Bei *m* = 1 weist die Doppelasymptotenfunktion eine Punktsymmetrie mit Zentrum *y* = -*d* auf. Vorzugsweise liegt der Parameter *m* im Bereich 0,2 < *m* < 2, weiter bevorzugt im Bereich 0,4 < *m* < 1;
- Wird für den variablen Parameter *c* das negative Vorzeichen (*c* < 0) gewählt, so gilt:

  - Nahteilasymptote $A_{1G}(y \rightarrow -\infty) = A_{1GNähe} = b_G$; und
  - Fernteilasymptote $A_{1G}(y \rightarrow +\infty) = A_{1Ferne} = (b_G + a_G)$.

In der Regel wird die Start-Objektabstandsfunktion $A_{1G}(y)$, welche dem Startdesign (Grunddesign) zugeordnet ist, derart vorgegeben, dass die Objektentfernungen im Fernbezugspunkt *DF* und im Nahbezugspunkt *DN* (Designpunkten Ferne und Nähe) in etwa den Standardobjektentfernungen $A_{1GFerne}$ und $A_{1GNähe}$, d.h. die Sollobjektentfernungen in dem Fern- und dem Nahbezugspunkt gemäß einem Standard-Objektabstandsmodell, entsprechen. Die Parameter $a_G, b_G$ können folglich anhand den Standardvorgaben für die reziproken Objektabstände $A_{1GFerne}$ und $A_{1GNähe}$ in den Fern- und Nahbezugspunkte *DF* und *DN* automatisch ermittelt werden. Ein Standard-Objektabstandsmodell ist z.B. in DIN 58 208 Teil 2 angegeben.

Wählt ein Brillenträger in dem Fern- und/oder Nahbezugspunkt abweichende Objektentfernungen $A_{1Ferne}$ und $A_{1Nähe}$ wird die Start-Objektabstandsfunktion mit einer Korrekturfunktion überlagert, um dieser Veränderung Rechnung zu tragen.

Die Korrekturfunktion $A_{1Korr}(y)$ kann z.B.

- eine                              Doppelasymptotenfunktion                        der                        Form
$$A_{Korr}(y) = DAS_{Korr}(y) = b_{korr} + \frac{a_{korr}}{(1 + e^{c_{korr}(y+d_{korr})})^{m_{korr}}}$$ mit den Parametern (Koeffizien-

ten) $a_{korr}$, $b_{korr}$, $c_{korr}$, $d_{korr}$, $m_{korr}$;

- eine lineare Funktion der Start-Objektabstandsfunktion $A_{1Korr}(y) = c + mA_{1G}(y)$ mit den Parametern (Koeffizienten) $c$ und $m$; oder

- eine andere geeignete Funktion sein.

Zusätzlich oder alternativ kann die Start-Objektabstandsfunktion mit anderen Funktionen überlagert werden, um z.B. eine gezielte Abänderung der Designcharakteristik zu erzielen. So kann die Start-Objektabstandsfunktion mit einer Funktion in Form einer Gauss'schen Glockenkurve

$$A_{1Korr}(y) = A_{1Gauss}(y) = g(y) = g_a + g_b e^{\frac{y-y_0}{\sigma}}$$ mit den Parametern (Koeffizienten) $g_a, g_b, y_0, \sigma$ überlagert werden.

Zumindest einer der Parameter der Korrekturfunktion ist variabel und wird in Abhängigkeit von den erfassten Objektabstandsdaten, insbesondere von den geänderten Sollwerten für die Objektabstände im Fern- und/oder im Nahbezugspunkt bestimmt bzw. festgelegt.

Vorzugsweise ist die Korrekturfunktion eine Doppelasymptotenfunktion der Form

$$A_{Korr}(y) = DAS_{Korr}(y) = b_{korr} + \frac{a_{korr}}{\left(1 + e^{c_{korr}(y+d_{korr})}\right)^{m_{korr}}} \qquad (21)$$

mit den Parametern (Koeffizienten) $a_{korr}, b_{korr}, c_{korr}, d_{korr}, m_{korr}$.

In diesem Fall gilt:

$$A_1(y) = A_{1G}(y) + DAS_{korr}(y). \qquad (22)$$

Die variablen Parameter/Koeffizienten $b_{korr}$ und $a_{korr}$ der Korrekturfunktion werden in Abhängigkeit von den erfassten Objektentfernungsdaten bestimmt bzw. festgelegt.

Vorzugsweise sind sowohl die Start-Objektabstandsfunktion als auch die Korrekturfunktion Doppelasymptotenfunktionen. Vorzugsweise weist die Korrekturfunktion die gleichen Parameter $c$, $d$ und $m$ auf, wie die Parameter der Start-Objektabstandsfunktion (d.h. $c = c_{korr}, d = d_{korr}, m = m_{korr}$). In diesem Fall gilt:

$$A_1(y) = A_{1G}(y) + DAS_{Korr}(y) = \left(b_G + \frac{a_G}{(1 + e^{c(y+d)})^m}\right) + \left(b_{kor} + \frac{a_{korr}}{(1 + e^{c(y+d)})^m}\right) =$$

$$(b_G + b_{korr}) + \frac{(a_G + a_{korr})}{(1 + e^{c(y+d)})^m}. \qquad (23)$$

Somit kann sichergestellt werden, dass die Charakteristik der Start-Objektabstandsfunktion bei einer Anpassung an geänderte Objektabstände im Wesentlichen beibehalten wird.

Mit den beiden Bedingungen $A_1(y_{DF}) = A_{1Ferne}$ und $A_1(y_{DN}) = A_{1Nähe}$ sind die beiden Koeffizienten $b = (b_G + b_{korr})$ und $a = (a_G + a_{korr})$ und folglich auch die Koeffizienten $b_{korr} = (b - b_G)$ und $a_{korr} = (a - a_G)$ der Korrekturfunktion eindeutig bestimmt.

Die Koeffizienten/Parameter der Start-Objektabstandsfunktion (Grundfunktion) und die Koeffizienten/Parameter der Korrekturfunktion können vorab bestimmt werden und vorzugsweise getrennt in einem Speicher als Datenfiles gespeichert werden. Dies ermöglicht eine einfache nachträgliche Reproduktion und Änderung der Werte des Startdesigns.

Wie bereits oben ausgeführt, kann die Start-Objektabstandsfunktion, welche insbesondere eine Doppelasymptotenfunktion sein kann alternativ oder zusätzlich zu einer. Überlagerung mit einer Korrekturfunktion $A_{1Korr}(y)$ - mit einer Funktion in Form einer Gauss'schen Glockenkurve $A_{1Gauss}(y) = g(y) = g_a + g_b e^{-\frac{y-y_0}{\sigma}}$ mit den Parametern/Koeffizienten $g_a, g_b, y_0, \sigma$ überlagert werden:

$$A_1(y) = A_{1G}(y) + A_{1Gauss}(y) = A_{1G}(y) + (g_a + g_b e^{-\frac{y-y_0}{\sigma}}) \qquad (24)$$

In dem Fall, dass die Start-Objektabstandsfunktion eine Doppelasymptotenfunktion ist, gilt:

$$A_1(y) = A_{1G}(y) + A_{1Gauss}(y) = (b\frac{a}{(1+e^{c(y+d)})^m}) + (g_a + g_b e^{-\frac{y-y_0}{\sigma}}) \qquad (25)$$

Durch die Überlagerung der Start-Objektabstandsfunktion (Grundfunktion) mit einer Gauss'schen Glockenkurve (Gauss'schen Funktion) kann die Kurvencharakteristik der Start-Objektabstandsfunktion gezielt abgeändert werden. Insbesondere bewirkt die Gauss'sche Funktion, dass die Objektabstandsfunktion oberhalb des Gaussmaximums flacher verläuft. Die Brechwertänderung wird in diesem Bereich geringer, die Isoastigmatismuslinien rücken weiter nach außen und der im Wesentlichen fehlerfreie Glasbereich, z.B. der Glasbereich mit einem astigmatischen Fehler kleiner als 0,5 dpt, wird breiter. Somit können Bereiche (z.B. der Zwischenbereich) gezielt höher oder niedriger gewichtet werden.

So kann zum Beispiel aus einem gleichmäßigen, langsamen Übergang vom Fernteilwert der Objektentfernung $A_{1GFerne}$ zum Nahteilwert der Objektentfernung $A_{1GNähe}$ ($g_b \approx 0$) ein anderer Verlauf der Objektabstandsfunktion $A_1$ ($u = 0, y$) = $A_1(y)$ ($A_1$ -Verlauf) für ein Bildschirmarbeitsplatzglas ($g_b \neq 0, \sigma \neq 0$) erzeugt werden.

In einem Beispiel kann anhand einer prozentualen Gewichtung $g_G$ der Gauss'schen Funktion, wobei $g_G \in [0,100]\%$, nach Vorgabe eines maximalen $A_1$-Zuwachses der Gauss'schen Funktion $g_{b\,max}$ (eine designspezifische Vorgabe) der zugehörige Koeffizient $g_b$ der Gauss'schen Funktion ermittelt werden:

$$g_b = \frac{g_G}{100} g_{b\,max} \cdot \qquad (26)$$

Bei einer 90% Gewichtung der Gauss'schen Funktion und einem maximalen $A_1$-Zuwachs der Gauss'schen Funktion $g_{b\,max}$ = 0,6 dpt ergibt sich für $g_b$ z.B. einen Wert von 0,54 dpt.

Die prozentuale Gewichtung $g_G$ sowie die weiteren Koeffizienten der Gauss'schen Funktion können für das jeweilige Grunddesign vorgegeben werden oder z.B. anhand des in WO 2010/084019 beschriebenen Verfahrens anhand eines Designvielecks ermittelt werden. Vorzugsweise liegt der Parameter $g_a$ im Bereich $-1 < g_a < 1$, weiter bevorzugt ist $g_a$ = 0. Der Parameter. $y_0$ liegt vorzugsweise im Bereich $-10 < y_0 < 5$, weiter bevorzugt im Bereich $-5 < y_0 < 0$. Der Parameter $\sigma$ liegt vorzugsweise im Bereich $0 < \sigma < 15$, ferner bevorzugt im Bereich $5 < \sigma < 10$.

Die Überlagerung der Start-Objektabstandsfunktion mit einer Gauss'schen Glockenkurve kann gemäß einem weiteren Aspekt unabhängig von einer Überlagerung mit einer Korrekturfunktion erfolgen.

Gemäß einem weiteren Beispiel ist die Korrekturfunktion $A_{Korr}(y)$ eine lineare Funktion der Start-Objektabstandsfunktion:

$$A_{Korr}(y) = c + mA_{1G}(y) \qquad (27)$$

mit den Parametern/Koeffizienten c und *m*.

Die abgeänderte Objektabstandsfunktion stellt somit ebenfalls eine lineare Funktion der Start-Objektabstandsfunktion $A_{1G}$ ($u = 0, y$) = $A_{1G}$ ($y$) dar:

$$A_1(y) = A_{1G}(y) + c + mA_{1G}(y) = c + (1+m)A_{1G}(y) \qquad (28)$$

oder in einer abgekürzten Schreibenweise

$$A_1 = A_{1G} + c + mA_{1G} = c + (1+m)A_{1G}. \qquad (29)$$

Vorzugsweise werden die Geradenkoeffizienten c und $m$ aus den Abweichungen der Werte der Start-Objektabstandsfunktion $A_{1G}(y)$ von den erfassten Sollwerten der reziproken Objektentfernung in dem Fern- und Nahbezugspunkt berechnet. Anders ausgedrückt erfolgt eine lineare Anpassung der Start-Objektabstandsfunktion an die geänderten Objektabstände im Fern- und/oder im Nahbezugspunkt.
Vorzugsweise gilt In diesem Fall gilt für den Koeffizienten c und $m$:

$$c = \frac{\Delta A_{1F} A_{1G}(y_{DN}) - \Delta A_{1N} A_{1G}(y_{DF})}{A_{1G}(y_{DN}) - A_{1G}(y_{DF})}$$

$$m = \frac{\Delta A_{1N} - \Delta A_{1F}}{A_{1G}(y_{DN}) - A_{1G}(y_{DF})}, \qquad (30)$$

wobei

$$\Delta A_{1F} = A_{1Ferne} - A_{1G}(y_{DF});$$

$$\Delta A_{1N} = A_{1Nähe} - A_{1G}(y_{DN});$$

$A_{1Ferne}$ den reziproken Wert der Sollobjektentfernung im Fernbezugspunkt;
$A_{1Nähe}$ den reziproken Wert der Sollobjektentfernung im Nahbezugspunkt; Nähe;
$y_F$ die vertikale Koordinate des Fernbezugspunkts; und
$y_N$ die vertikale Koordinate des Nahbezugspunkts

bezeichnen.
Die Geradenkoeffizienten $c$ und $m$ werden beispielsweise wie folgt berechnet:
In einem ersten Schritt werden die Abweichungen der Werte der Start-Objektabstandsfunktion $A_{1G}(y)$ in den Bezugs- bzw. Designpunkten DF (mit den Koordinaten ($x = x_0, y_{DF}$) = ($u = 0, y_{DF}$)) und $DN$ (mit den Koordinaten ($x = x_0, y_{DN}$) = ($u = 0, y_{DN}$)) von den entsprechenden (individuellen) Werten $A_{1Ferne}$ und $A_{1Nähe}$ des reziproken Sollobjektanstands (der reziproken Sollobjektentfernung) für diese Punkten ermittelt:

$$\Delta A_{1F} = A_{1Ferne} - A_{1G}(y_{DF})$$

$$\Delta A_{1N} = A_{1Nähe} - A_{1G}(y_{DN}). \qquad (31)$$

Die Geradenkoeffizienten $c$ und $m$ können aus den zuvor ermittelten Abweichungen wie folgt berechnet werden:

14

$$c = \frac{\Delta A_{1F} A_{1G}(y_{DN}) - \Delta A_{1N} A_{1G}(y_{DF})}{A_{1G}(y_{DN}) - A_{1G}(y_{DF})} \tag{32}$$

$$m = \frac{\Delta A_{1N} - \Delta A_{1F}}{A_{1G}(y_{DN}) - A_{1G}(y_{DF})}$$

In den obigen Formeln bezeichnen:

$A_{1G}(y)$ die Start-Objektabstandsfunktion;
$A_{1Ferne}$ den Sollwert des reziproken Objektabstandes im Fernbezugspunkt (Designpunkt Ferne);
$A_{1Nähe}$ den Sollwert des reziproken Objektabstandes im Nahbezugspunkt (Designpunkt Nähe); und
$A_1(y)$ die korrigierte/angepasste Objektabstandsfunktion.

Durch diese angepasste Objektabstandsfunktion, welche eine lineare Funktion der Start-Objektabstandsfunktion ist, wird der Verlauf des reziproken Objektabstandes entlang der Hauptblicklinie nicht wesentlich geändert. Insbesondere unterscheiden sich die Steigungen bzw. Ableitungen der Grundfunktion $A_{1G}(y)$ und der abgeänderten/korrigierten Objektabstandsfunktion $A_1(y)$ lediglich um den konstanten Faktor $(1 + m)$ :

$$\frac{dA_1}{dy} = \frac{dA_{1G}}{dy} + m\frac{dA_{1G}}{dy} = \frac{dA_{1G}}{dy}(1 + m) \tag{33}$$

Anders ausgedrückt wird die erste Ableitung der Start-Objektabstandsfunktion nur um einen Faktor $(1 + m)$ verändert. Bei weitestgehender Vollkorrektion wird die Grundcharakteristik eines progressiven Brillenglases in der Umgebung der Hauptblicklinie jedoch vorwiegend durch den Verlauf der Objektabstandsfunktion $A_1(y)$ entlang der Hauptblicklinie bestimmt (Satz von Minkwitz). Die lineare Anpassung der Start-Objektabstandsfunktion ermöglicht es, die Designcharakteristik auch bei einer Anpassung der Objektabstände an geänderte Vorgaben in einem oder zwei Punkten mit vernachlässigbarem Rechenaufwand sehr gut zu erhalten.

Das oben beschriebene Verfahren lässt sich unabhängig vom Verlauf des reziproken Objektabstandes entlang der Hauptblicklinie anwenden. Ebenfalls ist es möglich, die Charakteristik der Objektabstandsfunktion entlang der Hauptblicklinie im Wesentlichen beizubehalten und gleichzeitig die Objektabstände in den Designpunkten/Bezugspunkten designabhängig zu variieren oder an den Bedürfnissen oder Wünschen des Brillenträgers anzupassen.

In diesem Beispiel kann die Start-Objektabstandsfunktion (Grundfunktion) $A_{1G}(y)$ eine beliebige analytische Funktion oder auch eine Interpolationsfunktion (Splinefunktion) sein. Es müssen keine Koeffizienten der Grundfunktion bekannt sein oder abgeändert werden. Wenn $A_{1G}(y)$ punktweise vorgegeben oder, wie in der Patentanmeldung DE 10 2009 005 847.8 beschrieben, vor der Optimierung abgeändert wird, eignet sich dieses Verfahren insbesondere hervorragend zum Angleichen der Objektabstandsfunktion an die individuellen Sollobjektentfernungen in den Designpunkten bzw. Bezugspunkten.

Die oben beschriebenen Transformationen der Start-Objektabstandsfunktion durch Überlagerung der Start-Objektanstandsfunktion mit einer Doppelasymptoten-Korrekturfunktion, durch Überlagerung der Start-Objektanstandsfunktion mit einer Gauss'schen Funktion oder durch eine lineare Anpassung können selbstverständlich in beliebiger Reihenfolge miteinander kombiniert werden.

Wie bereits oben ausgeführt, kann die Optimierung des Brillenglases anhand der transformierten Sollastigmatismusverteilung eine Minimierung einer Zielfunktion umfassen, in der Sollwerte für den Sollastigmatismus und/oder für den Brechwertfehler (vgl. Gleichungen (1) und (2) oder Gleichungen (15) und (16)) eingehen. Die in die Zielfunktion eingehenden Werte können die gemäß einem bevorzugten Beispiel der Erfindung ermittelten Werte einer asymmetrischen Sollastigmatismusverteilung ($Ast_{Soll_{neu}}$) sein. Die Sollastigmatismusverteilung kann jedoch auch eine beliebige vorgegebene Sollastigmatismusverteilung sein, z.B. eine Sollastigmatismusverteilung, welche mit dem in der DE 10 2008 015 189, DE 10 2009 005 206 oder DE 10 2009 005 214 offenbarten Verfahren ermittelt wurde. Die Brechwertverteilung des Brillenglases, deren Sollwerte in die Zielfunktion eingehen, ist vorzugsweise eine Brechwertverteilung, welche unter Berücksichtigung eines vorgegebenen Akkomodationsmodells des Auges des Brillenträgers und der zuvor ermittelten Objektabstandsfunktion bestimmt wird. Die Sollbrechwertverteilung kann zum Beispiel derart bestimmt werden, dass entlang der Hauptblicklinie eine im Wesentlichen (d.h. im Rahmen tolerierbarer Restfehler) vollständige Korrektion mit dem Brillenglas vorliegt. Anders ausgedrückt werden die bei einer Blickbewegung entlang der Hauptblicklinie anvisierten Objekte, deren Objektabstand durch die Objektabstandsfunktion gegeben ist, optimal in der Fovea des Auges abgebildet.

Vorzugsweise erfolgt die Optimierung des Brillenglases in Gebrauchsstellung des Brillenglases. Vorzugsweise werden bei der Optimierung des Brillenglases neben den individuellen Verordnungswerten (Sph, Zyl, Achse, Add, Prisma, Basis), Parameter der individuellen Lage bzw. Anordnung des Brillenglases vor dem Auge des Brillenträgers (z.B. Hornhautscheitelabstand (HSA), Fassungsscheibenwinkel (FSW), Vorneigung bzw. pantoskopischer Winkel), physiologische Parameter des Brillenträgers (z.B. Pupillendistanz) berücksichtigt. Alternativ können durchschnittliche Parameter der Lage bzw. Anordnung des Brillenglases vor dem Auge des Brillenträgers und/oder durchschnittliche physiologische Parameter des Brillenträgers berücksichtigt werden. Das progressive Brillenglas kann online nach Bestelleingang als Unikat optimiert und berechnet werden.

Vorzugsweise umfasst das Verfahren ferner die Schritte:

Erfassen der Verordnungswerte des Brillenglases; und
Erfassen der vorzugsweise individuellen Parameter des Brillenglases und/oder der Anordnung des Brillenglases vor den Augen des Brillenträgers.

Erfindungsgemäß werden ferner ein Computerprogrammerzeugnis, d.h. ein in der Patentanspruchskategorie einer Vorrichtung beanspruchtes Computerprogramm, sowie ein Speichermedium mit darauf gespeichertem Computerprogramm bereitgestellt, wobei das Computerprogramm ausgelegt ist, wenn geladen und ausgeführt auf einem Computer, ein bevorzugtes Verfahren zum Optimieren eines progressiven Brillenglases gemäß dem ersten Aspekt der Erfindung durchzuführen.

Ferner wird gemäß einem Aspekt eine Vorrichtung zum Optimieren eines progressiven Brillenglases vorgeschlagen, umfassend Optimierungsmittel, welche ausgelegt sind, ein Berechnen bzw. Optimieren des Brillenglases nach einem bevorzugten Beispiels des Verfahrens zum Optimieren eines progressiven Brillenglases gemäß dem ersten Aspekt der Erfindung durchzuführen.

Insbesondere umfasst die Vorrichtung zum Optimieren eines progressiven Brillenglases

Speichermittel zum Speichern einer Start-Sollastigmatismusverteilung $Ast_{Soll_{start}}$ für das progressive Brillenglas;
Sollastigmatismusverteilung-Berechnungsmittel, welche ausgelegt sind, eine transformierte Sollastigmatismusverteilung $Ast_{soll_{neu}}$ aus der Start-Sollastigmatismusverteilung zu ermitteln; und
Brillenglas-Optimierungsmittel, welche ausgelegt sind, ein progressives Brillenglases anhand der transformierten Sollastigmatismusverteilung zu optimieren.

Die Sollastigmatismusverteilung-Berechnungsmittel sind ausgelegt

ein Multiplizieren des Werts des maximalen temporalen Sollastigmatismus $max\_Ast_{Soll}\_temporal_{start}$ der Start-Sollastigmatismusverteilung $Ast_{soll_{start}}$ mit einem Faktor $k$:
$$max\_Ast_{Soll}\_temporal_{neu} = k * max\_Ast_{soll}\_temporal_{start},$$
wodurch sich ein abgeänderter maximaler temporaler Astigmatismus $max\_Ast_{soll}\_temporal_{neu}$ ergibt, wobei der Faktor $k$ eine Funktion zumindest eines Verordnungswerts und/oder zumindest eines Parameters es Brillenglases oder dessen Anordnung vor den Augen des Brillenträgers ist; und
ein Transformieren der Start-Sollastigmatismusverteilung $Ast_{soll_{start}}$ auf Basis des abgeänderten maximalen temporalen Astigmatismus $max\_Ast_{Soll}\_temporal_{neu}$

durchzuführen.

Die Start-Sollastigmatismusverteilung $Ast_{Soll_{start}}$ kann in einem Speicher dauerhaft oder temporär gespeichert werden. Die Sollastigmatismusverteilung-Berechnungsmittel und die Brillenglas-Optimierungsmittel können mittels entsprechend konfigurierten bzw. programmierten herkömmlichen Computern, spezialisierter Hardware und/oder Computernetzen bzw. Computersystemen implementiert werden. Es ist möglich, dass der gleiche Computer bzw. das gleiche Computersystem derart konfiguriert bzw. programmiert ist, sowohl die Berechnung einer transformierten Sollastigmatismusverteilung als auch die Optimierung des Brillenglases nach der transformierten Sollastigmatismusverteilung durchzuführen. Es ist jedoch selbstverständlich möglich, dass die Berechnung der transformierten Sollastigmatismusverteilung und die Berechnung des Brillenglases nach der transformierten Sollastigmatismusverteilung in separaten Recheneinheiten, beispielsweise in separaten Computern oder Computersystemen erfolgen.

Die Sollastigmatismusverteilung-Berechnungsmittel und/oder die Brillenglas-Optimierungsmittel können mittels geeigneter Schnittstellen in einer Signalverbindung mit dem Speicher stehen und insbesondere die in dem Speicher gespeicherten Daten auslesen und/oder modifizieren. Ferner können die Sollastigmatismusverteilung-Berechnungsmittel und/oder die Brillenglas-Optimierungsmittel vorzugsweise jeweils interaktive grafische Benutzerschnittstellen (GUI) umfassen, welche es einem Benutzer ermöglichen, die Berechnung der transformierte Sollastigmatismusverteilung $Ast_{sollneu}$ und die Optimierung des progressiven Brillenglases zu visualisieren und gegebenenfalls durch Veränderung eines oder mehreren Parameter zu steuern.

Zusätzlich kann die Vorrichtung zum Optimieren eines progressiven Brillenglases

Objektabstandsfunktion-Vorgabemittel, welche ausgelegt sind, eine Start-Objektabstandsfunktion $A_{1G}(y)$ vorzugeben oder festzulegen;
Objektentfernungserfassungsmittel, welche ausgelegt sind, Objektentfernungsdaten zu erfassen, wobei die Objektentfernungsdaten eine Objektentfernung in zumindest einem vorgegebenen Punkt auf der Hauptblicklinie umfassen;
Objektabstandsfunktionänderungsmittel zum Abändern bzw. Transformieren der Start-Objektabstandsfunktion in Abhängigkeit von den erfassten Objektentfernungsdaten; und
Brillenglas-Optimierungsmittel zum Optimieren des progressiven Brillenglases, wobei bei der Optimierung des Brillenglases die transformierte Objektabstandsfunktion berücksichtigt wird,

umfassen.

Die Objektabstandsfunktion gibt den reziproken Objektabstand bzw. die reziproke Objektentfernung entlang der Hauptblicklinie als Funktion der vertikalen Koordinate $y$ an.

Das Abändern oder Transformieren der Start-Objektabstandsfunktion $A_{1G}(y)$ umfasst ein Überlagern $A_1(y) = A_{1G}(y) + A_{1Korr}(y)$ der Start-Objektabstandsfunktion $A_{1G}(y)$ mit einer Korrekturfunktion $A_{1Korr}(y)$. Die Korrekturfunktion weist zumindest einen variablen Parameter auf, welcher derart in Abhängigkeit von den erfassten Objektentfernungsdaten bestimmt wird, dass der Wert der abgeänderten Start-Objektabstandsfunktion in zumindest einem vorgegebenen Punkt gleich dem reziproken Wert der erfassten Sollobjektentfernung für diesen Punkt ist.

Die Objektabstandsfunktion-Vorgabemittel können Speichermittel umfassen, in welchen die Start-Objektabstandsfunktion oder die Parameter der Start-Objektabstandsfunktion, anhand deren die Start-Objektabstandsfunktion rekonstruiert werden, kann dauerhaft oder temporär gespeichert werden. Die Objektentfernungserfassungsmittel können zumindest eine interaktive grafische Benutzerschnittstelle (GUI) umfassen, welche es einem Benutzer ermöglicht, Daten bezüglich der gewünschten Objektentfernungen in zumindest einem vorgegebenen Punkt anzugeben und gegebenenfalls zu verändern.

Die Objektabstandsfunktionänderungsmittel und die Brillenglas-Optimierungsmittel können mittels entsprechend konfigurierten bzw. programmierten herkömmlichen Computern, spezialisierter Hardware und/oder Computernetzen bzw. Computersystemen implementiert werden. Der gleiche Computer bzw. das gleiche Computersystem, welcher/welches die Berechnung einer transformierten Objektabstandsfunktion (und gegebenenfalls einer transformierten Sollastigmatismusverteilung) durchführt, kann ebenfalls die Optimierung des Brillenglases nach der transformierten Objektabstandsfunktion durchführen. Es ist jedoch selbstverständlich möglich, dass die Berechnung der transformierten Objektabstandsfunktion und die Berechnung des Brillenglases nach der transformierten Objektabstandsfunktion in separaten Recheneinheiten, beispielsweise in separaten Computern oder Computersystemen erfolgen. Die Objektabstandsfunktionänderungsmittel und die Brillenglas-Optimierungsmittel können mittels geeigneter Schnittstellen miteinander in Signalverbindung stehen.

Die Objektabstandsfunktionänderungsmittel können ebenfalls mittels geeigneter Schnittstellen in einer Signalverbindung mit dem Objektabstandsfunktion-Vorgabemittel stehen und insbesondere die in den Speichermitteln gespeicherten Daten auslesen und/oder modifizieren.

Ferner können die Objektabstandsfunktionänderungsmittel und/oder die Brillenglas-Optimierungsmittel vorzugsweise jeweils interaktive grafische Benutzerschnittstellen (GUI) umfassen, welche es einem Benutzer ermöglichen, die Berechnung der transformierten Objektabstandsfunktion und die Optimierung des progressiven Brillenglases zu visualisieren und gegebenenfalls durch Veränderung eines Parameters oder mehrerer Parameter zu steuern.

Gemäß einem weiteren Aspekt wird ein Verfahren zum Herstellen eines progressiven Brillenglases vorgeschlagen, umfassend:

-   Optimieren des Brillenglases nach einem bevorzugten Beispiel des Verfahrens zum Optimieren eines progressiven Brillenglases gemäß dem ersten Aspekt der Erfindung,
-   Bereitstellen von Flächendaten des berechneten bzw. optimierten Brillenglases; und
-   Fertigen des Brillenglases gemäß den bereitgestellten Flächendaten des Brillenglases.

Die Fertigung bzw. Bearbeitung des Brillenglases kann mittels CNC- Maschinen, mittels eines Gießverfahrens, einer Kombination der beiden Verfahren oder nach einem anderen geeigneten Verfahren erfolgen.

Ebenfalls wird eine Vorrichtung zum Herstellen eines progressiven Brillenglases bereitgestellt, umfassend:

- Optimierungsmittel, welche ausgelegt sind, ein Berechnen bzw. Optimieren des Brillenglases nach einem bevorzugten Beispiel des Verfahrens zum Optimieren eines progressiven Brillenglases durchzuführen; und
- Bearbeitungsmittel zum Fertigbearbeiten des Brillenglases.

Die Optimierungsmittel können die oben beschriebene Vorrichtung zum Optimieren eines progressiven Brillenglases sein.

Wie bereits oben ausgeführt können die Bearbeitungsmittel z.B. CNC gesteuerte Maschinen zur Direktbearbeitung eines Blanks nach den ermittelten Optimierungsvorgaben umfassen. Das fertigbearbeitete Brillenglas kann eine einfache sphärische oder rotationssymmetrisch asphärische Fläche und eine progressive Fläche aufweisen, wobei die progressive Fläche unter Berücksichtigung einer individuellen Objektanstandsfunktion und/oder einer (asymmetrischen) Sollastigmatismusverteilung sowie gegebenenfalls individueller Parameter des Brillenträgers optimiert wird. Vorzugsweise ist die sphärische oder rotationssymmetrisch asphärische Fläche die Vorderfläche (d.h. die objektseitige Fläche) des Brillenglases. Selbstverständlich ist es jedoch möglich, die nach dem berechneten Design optimierte Fläche als Vorderfläche des Brillenglases anzuordnen. Ebenfalls ist es möglich, dass beide Flächen des Brillenglases progressive Flächen sind. Des Weiteren ist es möglich, beide Flächen des Brillenglases zu optimieren.

Die Vorrichtung zum Herstellen eines progressiven Brillenglases kann ferner Erfassungsmittel zum

Erfassen der Verordnungswerte des Brillenglases; und
Erfassen der (individuellen) Parameter des Brillenglases und/oder der Anordnung des Brillenglases vor den Augen des Brillenträgers

umfassen.

Alternativ oder zusätzlich kann die Vorrichtung zum Herstellen eines progressiven Brillenglases ferner Erfassungsmittel zum Erfassen von Objektentfernungsdaten umfassen. Die Erfassungsmittel können insbesondere grafische Benutzerschnittstellen umfassen.

Ferner wird ein progressives Brillenglas, welches nach einem bevorzugten Herstellungsverfahren hergestellt ist, vorgeschlagen, sowie eine Verwendung des nach einem bevorzugten Herstellungsverfahren hergestellten progressiven Brillenglases in einer vorgegebenen durchschnittlichen oder individuellen Gebrauchsstellung des Brillenglases vor den Augen eines bestimmten Brillenträgers zur Korrektur einer Fehlsichtigkeit des Brillenträgers.

Mit der vorgeschlagenen Vorgehensweise zur Abänderung der Objektabstandsfunktion gemäß einem der bevorzugten Beispiele ist es möglich, eine vorgegebene Start-Objektabstandsfunktion, welche z.B. einem Standard-Objektabstandmodell entspricht, schnell und mit einem vergleichsweise geringen Rechenaufwand an einem, von dem Standard-Objektabstandsmodell abweichenden Modell für die Objektentfernungen (Objektabstände) anzupassen. Es ist ferner möglich, die Charakteristika der Start-Objektabstandsfunktion gezielt zu ändern, und so Objektabstandsfunktion für unterschiedliche Brillenglasdesigns zu erzeugen.

Weiteren Aufgaben, Merkmale und Vorteile der vorliegenden Erfindung gehen aus der nachfolgenden, detaillierten Beschreibung beispielhafter und bevorzugter Ausführungsformen der vorliegenden Erfindung mit Bezug auf die Zeichnungen hervor, in welchen zeigt:

Fig. 1       Start-Sollastigmatismusverteilung für eine Addition von 2,5 dpt;

Fig. 2       Sollastigmatismusverteilung für eine Addition von 2,5 dpt mit einer Skalierung des temporalen Astigmatismus;

Fig. 3       die in Fig. 2 gezeigte skalierte Sollastigmatismusverteilung, welche zusätzlich in Abhängigkeit von der Addition skaliert ist;

Fig. 4       die in Abhängigkeit von der Addition skalierte Start-Sollastigmatismusverteilung;

Fig. 5       einen Abschnitt einer graphischen Benutzerschnittstelle zum Festlegen des Vorfaktors $v$;

Fig. 6A       ein Beispiel einer Start-Sollastigmatismusverteilung;

Fig. 6B       ein Beispiel einer abgeänderten/transformierten Sollastigmatismusverteilung, welche aus der in Fig. 6A gezeigten Start-Sollastigmatismusverteilung berechnet wurde;

Fig. 7A       den Flächenbrechwert der progressiven Fläche eines progressiven Brillenglases, welches nach der in Fig. 6A gezeigten Start-Sollastigmatismusverteilung optimiert worden ist;

Fig. 7B       den Flächenbrechwert der progressiven Fläche eines progressiven Brillenglases, welches nach der in Fig. 6B gezeigten transformierten Sollastigmatismusverteilung optimiert worden ist;

Fig. 8A       den Gradient des Flächenbrechwerts der progressiven Fläche des progressiven Brillenglases, welches nach der in Fig. 6A gezeigten Start-Sollastigmätismusverteilung optimiert worden ist;

Fig. 8B       den Gradient des Flächenbrechwerts der progressiven Fläche des progressiven Brillenglases, welches nach der in Fig. 6B gezeigten transformierten Sollastigmatismusverteilung optimiert worden ist;

Fig. 9A       den Flächenastigmatismus der progressiven Fläche des progressiven Brillenglases, welches nach der in Fig. 6A gezeigten Start-Sollastigmatismusverteilung optimiert worden ist;

Fig. 9B     den Flächenastigmatismus der progressiven Fläche des progressiven Brillenglases, welches nach der in Fig. 6B gezeigten transformierten Sollastigmatismusverteilung optimiert worden ist;

Fig. 10A    den Gradient des Flächenastigmatismus der progressiven Fläche des progressiven Brillenglases, welches nach der in Fig. 6A gezeigten Start-Sollastigmatismusverteilung optimiert worden ist;

Fig. 10B    den Gradient des Flächenastigmatismus der progressiven Fläche des progressiven Brillenglases, welches nach der in Fig. 6B gezeigten transformierten Sollastigmatismusverteilung optimiert worden ist;

Fig. 11A    den Astigmatismus in Gebrauchstellung des progressiven Brillenglases, welches nach der in Fig. 6A gezeigten Start-Sollastigmatismusverteilung optimiert worden ist;

Fig. 11B    den Astigmatismus in Gebrauchstellung des progressiven Brillenglases, welches nach der in Fig. 6B gezeigten transformierten Sollastigmatismusverteilung optimiert worden ist;

Fig. 12A    den mittleren Brechwert in Gebrauchstellung des progressiven Brillenglases, welches nach der in Fig. 6A gezeigten Start-Sollastigmatismusverteilung optimiert worden ist;

Fig. 12B    den mittleren Brechwert in Gebrauchstellung des progressiven Brillenglases welches nach der in Fig. 6B gezeigten transformierten Sollastigmatismusverteilung optimiert worden ist;

Fig.13A,B   die Abbildung von Objekten in unterschiedlichen Objektentfernungen durch ein Brillenglas;

Fig. 14A,B  den reziproken Objektanstand (in dpt) entlang der Hauptblicklinie gemäß einem erfindungsgemäßen Beispiel;

Fig. 15A - 15H  ein Beispiel einer Anpassung einer Start-Objektabstandsfunktion an ein geändertes Objektabstandsmodell, wobei

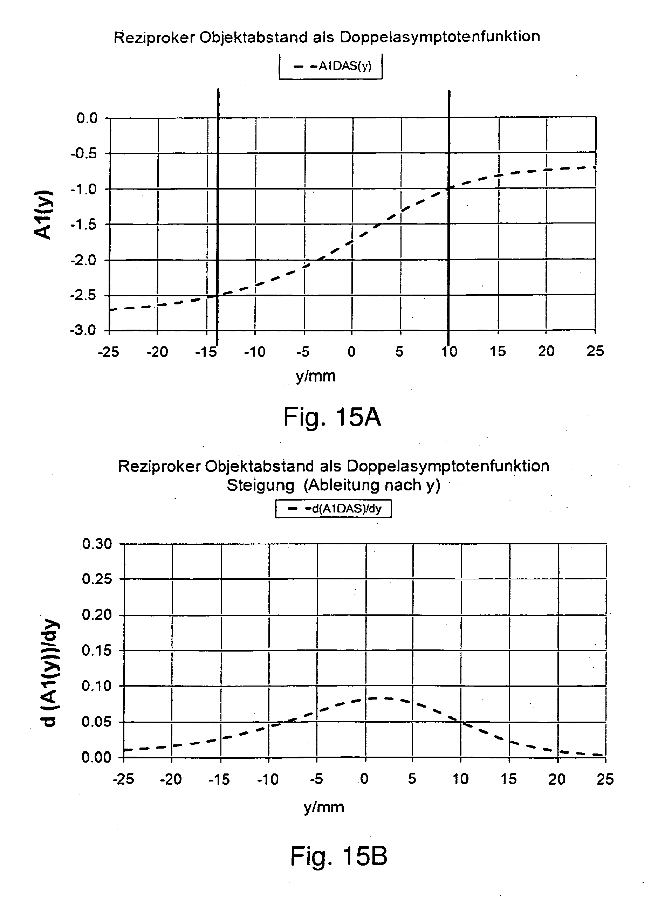

Fig. 15A eine weitere beispielhafte Start-Objektanstandsfunktion;

Fig. 15B die Steigung der Start-Objektanstandsfunktion;

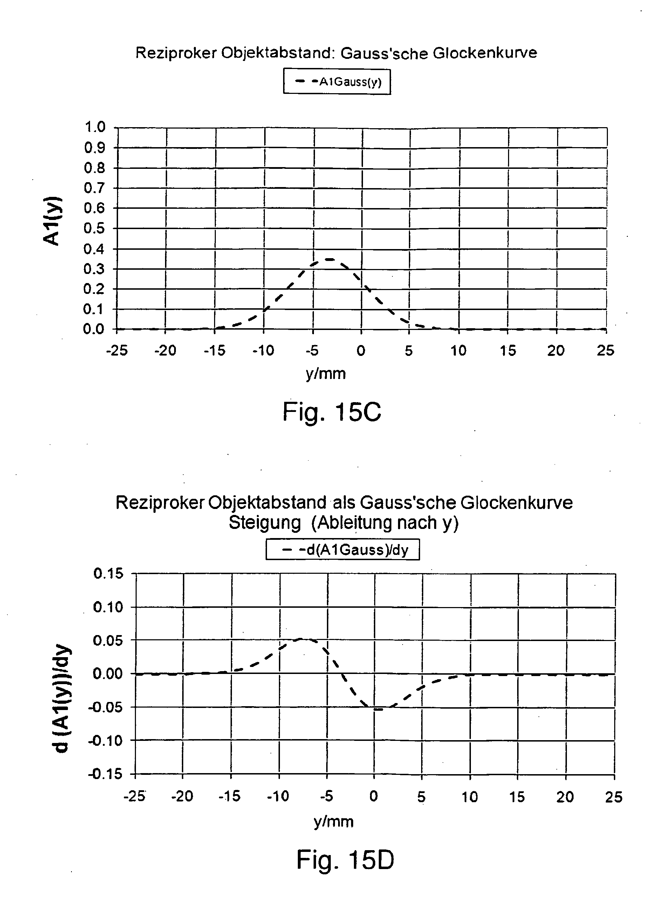

Fig. 15C eine beispielhafte Gauss'sche Funktion;

Fig. 15D die Steigung der Gauss'schen Funktion;

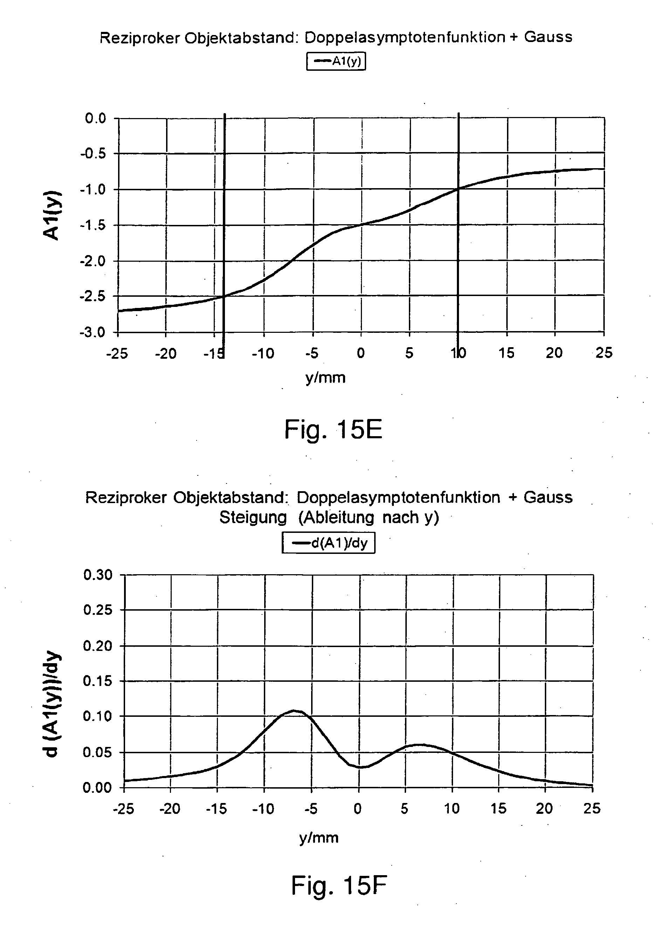

Fig. 15E die durch eine Überlagerung der Start-Objektabstandsfunktion mit der Gauss'schen Funktion erhaltene Objektabstandsfunktion;

Fig. 15F die Steigung der Objektabstandsfunktion;

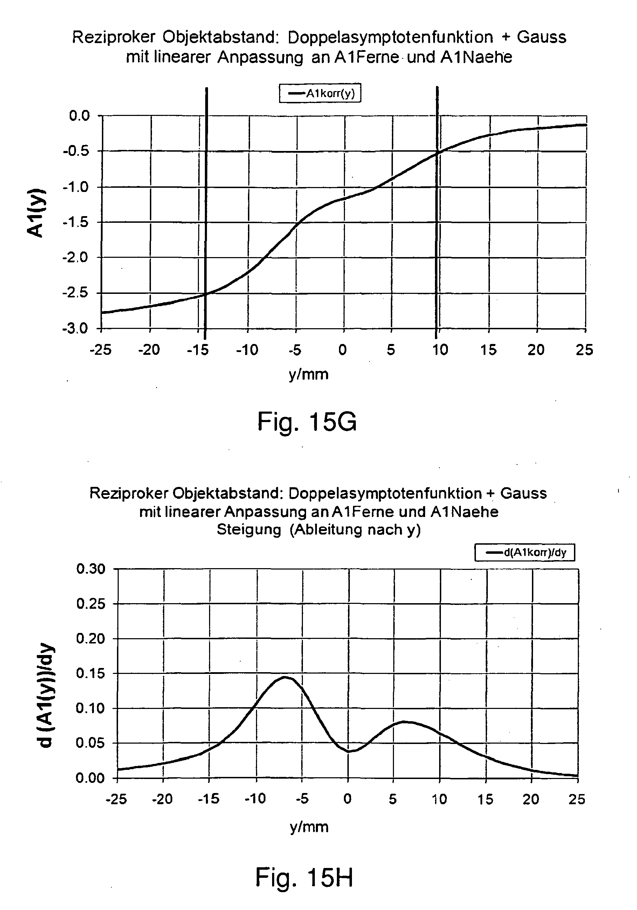

Fig. 15G die durch eine lineare Anpassung abgeänderte Objektabstandsfunktion; und

Fig. 15H die Steigung der durch eine lineare Anpassung abgeänderten Objektabstandsfunktion ist;

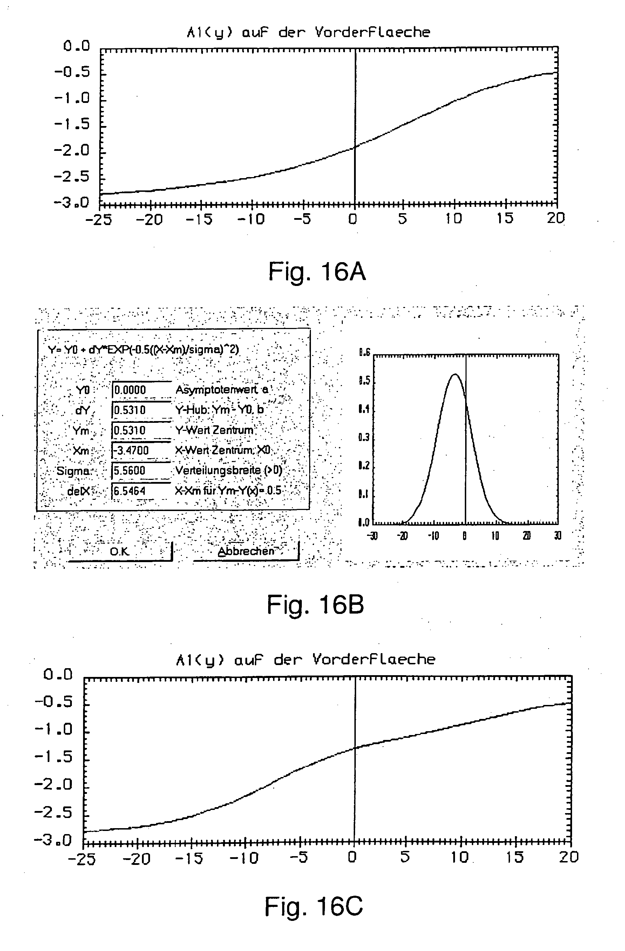

Fig. 16A -16C   ein Beispiel einer graphischen Benutzerschnittstelle zur Visualisierung und Änderung der Objektabstandsfunktion, wobei

Fig. 16A einen Abschnitt zur Visualisierung einer Start-Objektabstandsfunktion;

Fig. 16B einen Abschnitt zur Visualisierung und Änderung der Parameter einer Korrekturfunktion;

Fig. 16C einen Abschnitt zur Visualisierung der abgeänderten Start-Objektabstandsfunktion ist;

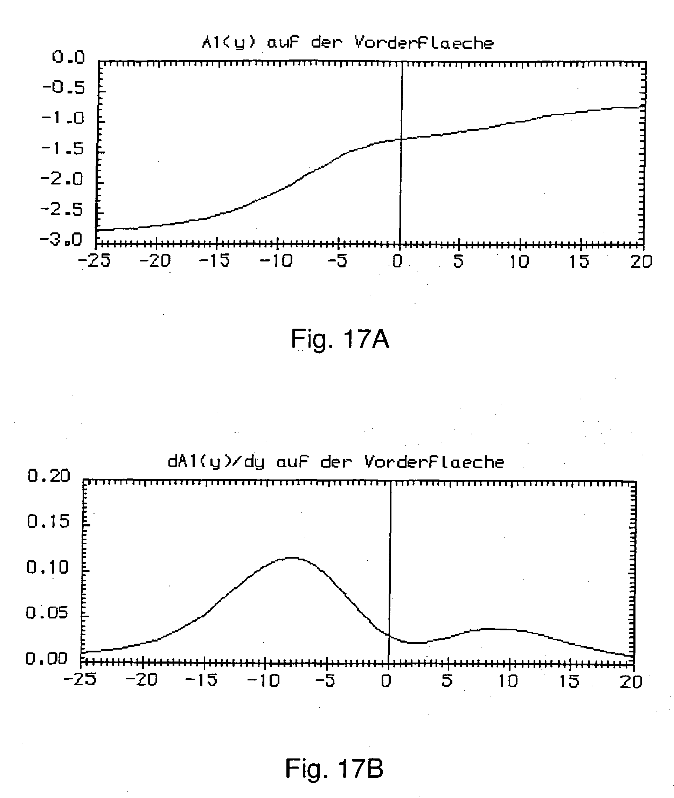

Fig. 17A-17C    ein weiteres Beispiel einer Anpassung einer Start-Objektabstandsfunktion an ein geänderten Objektabstandsmodell, wobei

Fig. 17A eine weitere beispielhafte Start-Objektanstandsfunktion;

Fig. 17B die Steigung der Start-Objektanstandsfunktion;

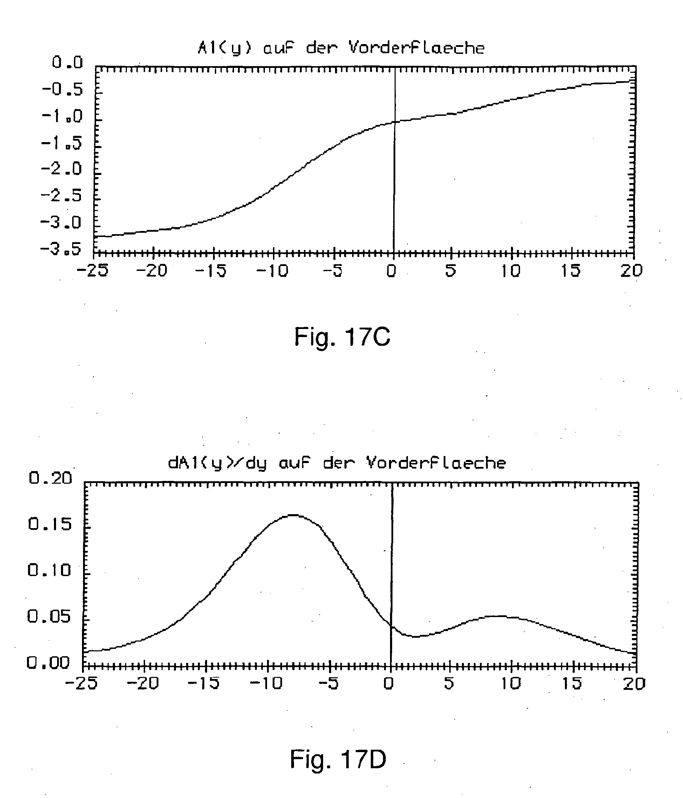

Fig. 17C die durch eine lineare Anpassung erhaltene neue Objektabstandsfunktion;

Fig. 17D die Steigung der neuen Objektabstandsfunktion ist;

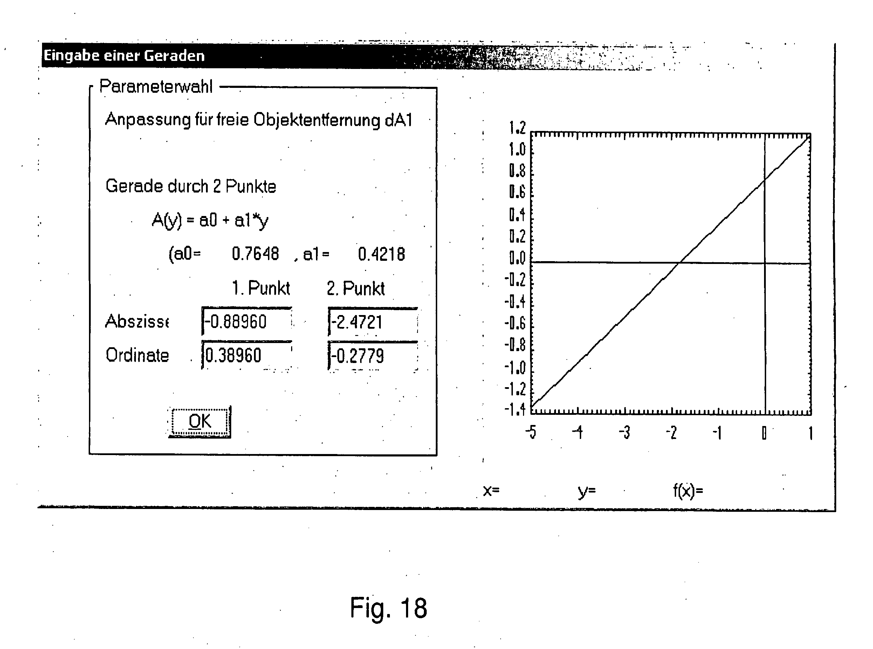

Fig. 18      eine beispielhafte graphische Benutzerschnittstelle zur Visualisierung und Änderung der Objektabstandsfunktion;

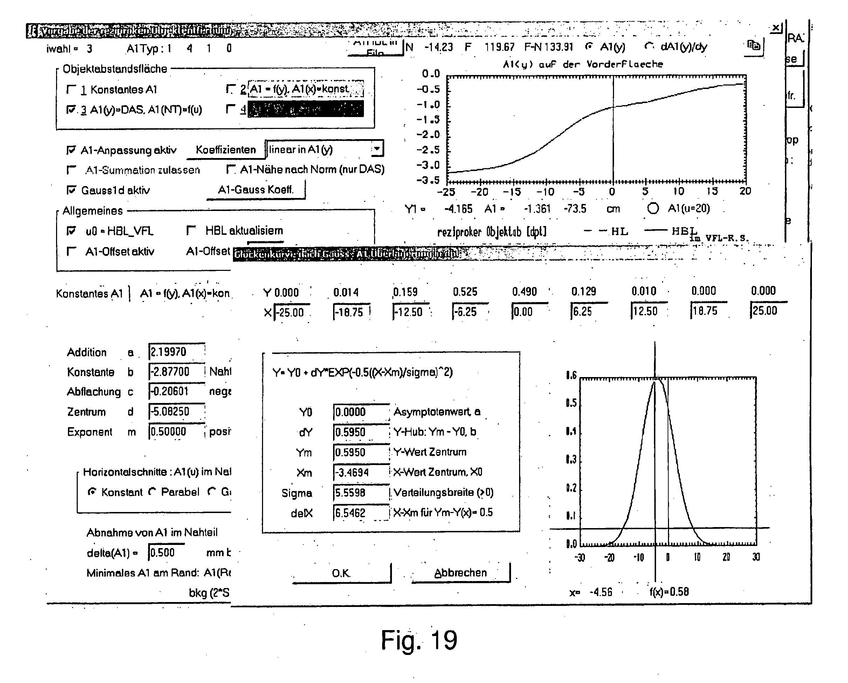

Fig. 19      eine weitere beispielhafte graphische Benutzerschnittstelle zur Visualisierung und Änderung der Objektabstandsfunktion.

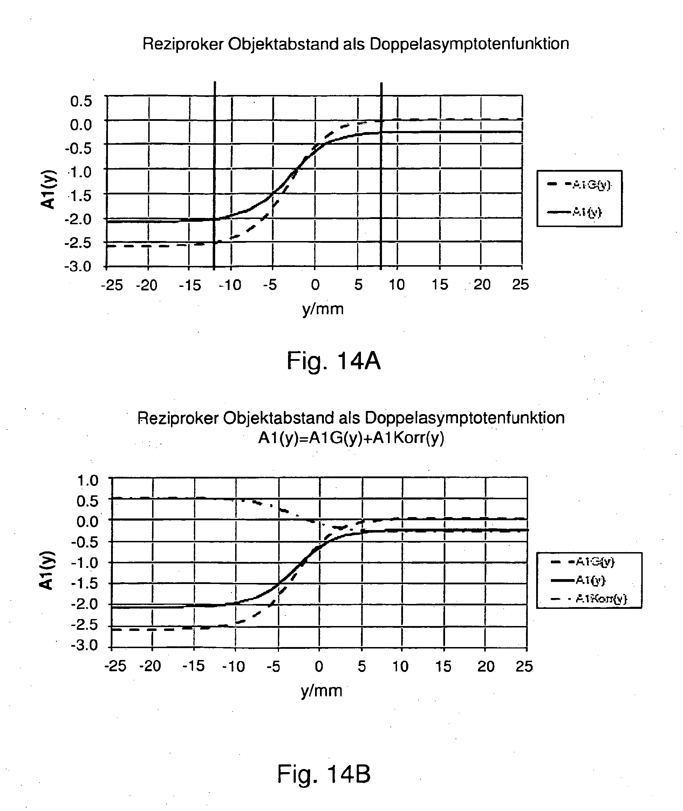

Auf der Abszisse der Figuren 14A bis 17D ist die vertikale Koordinate $y$ der Hauptblicklinie in mm aufgetragen. Auf der Ordinate der Figuren 14 bis 17 ist der reziproke Objektabstand (reziproke Objektentfernung) in dpt aufgetragen. Das Koordinatensystem ist das oben beschriebene Koordinatensystem $\{u, y\}$.

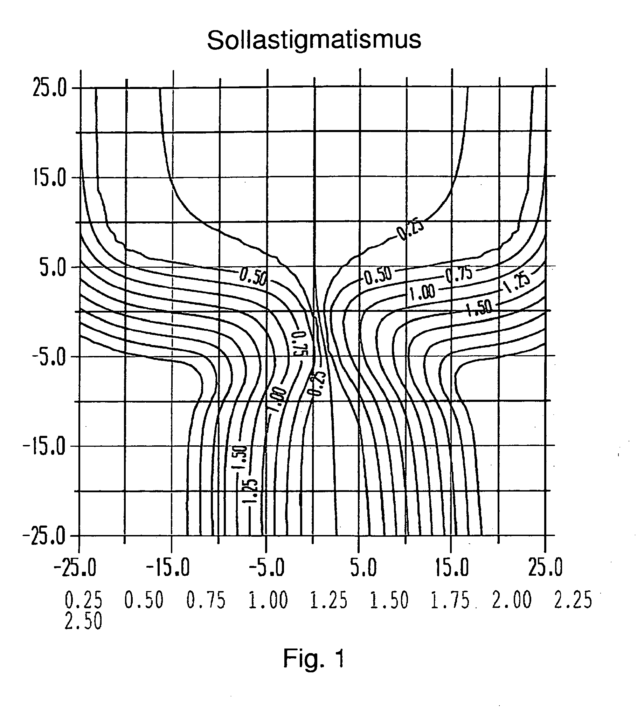

Fig. 1 zeigt die Start-Sollastigmatismusverteilung ausgehend von einer vorgegebenen Startfläche für eine Addition von 2,5 dpt. Der maximale Astigmatismus für die Peripherie beträgt 2,6 dpt. Ausgehend von der Start-Sollastigmatismusverteilung soll ein Brillenglas mit den folgenden Verordnungswerten und Parametern: Sphäre (Sph) = -5,0 dpt; Zylinder (Zyl) = 0,0 dpt; Addition (Add) = 2,5 dpt; Basiskurve (BK) = 3,0 dpt; Brechungsindex n = 1,579 berechnet werden. Das Brillenglas wird in einer Gebrauchsstellung mit den Parametern: Hornhautscheitelabstand (HSA) = 13 mm; Vorneigung (VN) = 7°; Pupillendistanz (PD) = 64 mm; Y-Verkippunktswinkel = 0° berechnet.

In einem Beispiel wird in Abhängigkeit von den Verordnungsdaten des Brillenglases (insbesondere des Verordnungsastigmatismus, der verordneten Achse des Verordnungsastigmatismus und der verordneten Addition) und des Verkippungswinkels des Brillenglases ein Faktor k =0,58 ermittelt (vgl. Gleichungen (7) bis (13)). Der Faktor $k$ = 0,58 wird mit dem maximalen temporalen Astigmatismus der Start-Sollastigmatismusverteilung multipliziert. Anschließend wird eine Interpolation der Sollastigmatismuswerte zwischen der 0,5 dpt Basis-Sollisoastigmatismuslinie und der Peripherie des Brillenglases unter Berücksichtigung des mit dem Faktor $k$ multiplizierten maximalen temporalen Astigmatismus durchgeführt. Die Interpolation erfolgt nach dem in DE 10 2009 005 206 oder DE 10 2009 005 214 beschrieben Kegelstumpfmodell für den peripheren Sollastigmatismus.

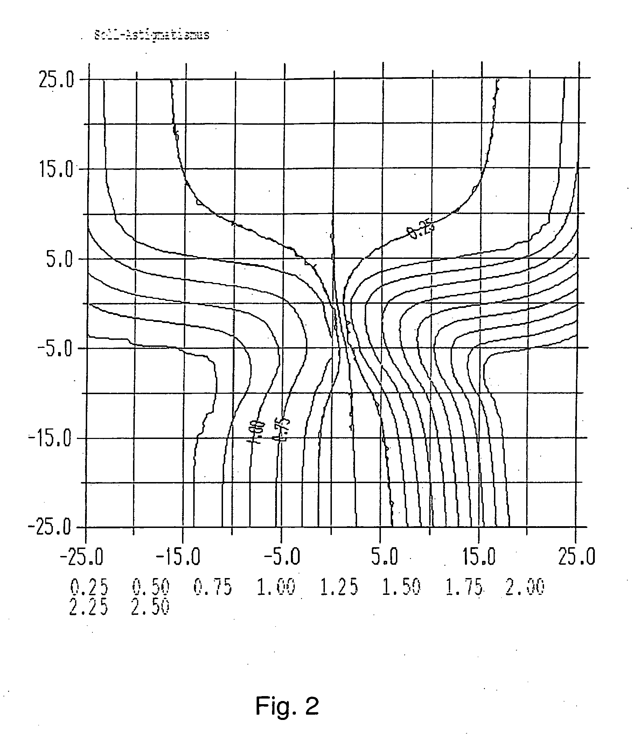

In diesem Beispiel hat die Multiplikation des maximalen temporalen Astigmatismus mit dem Faktor k keinen Einfluss auf die 0,5 dpt Basis-Sollisoastigmatismuslinie. Die Sollastigmatismuswerte zwischen der Hauptlinie und der 0,5 dpt Basis-Sollisoastigmatismuslinie bleiben somit unverändert. Zwischen der temporalen 0,5 dpt Basis-Sollisoastigmatismuslinie und der Spitze des temporalen Astigmatismushügels (d.h. die Position des maximalen Sollastigmatismus) wird jedoch eine Interpolation anhand des skalierten maximalen temporalen Astigmatismus (in diesem Fall 2,6 * 0,58 = 1,508 dpt) durchgeführt. **Fig. 2** zeigt die Sollastigmatismusverteilung, welche nach einer Multiplikation des maximalen temporalen Astigmatismus und einer anschließenden Interpolation erhalten wird. Die in Fig. 2 gezeigte asymmetrische Sollastigmatismusverteilung gilt für ein progressives Brillenglas mit einer Addition von 2,5 dpt.

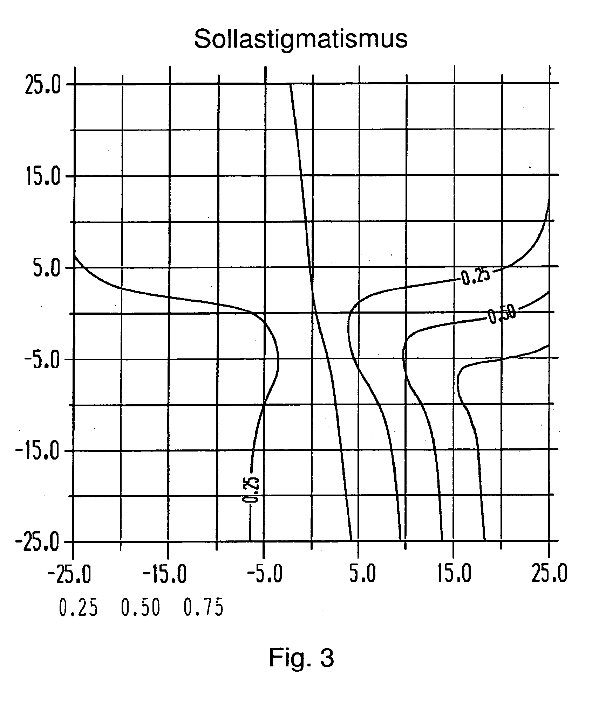

Wie in der DE 10 2008 015 189 beschrieben, könnte dann die durch eine Multiplikation des maximalen temporalen Sollastigmatismus mit anschließender Interpolation der Sollastigmatismuswerte entstandene Gesamtastigmatismusvorgabe in Abhängigkeit von der Addition als Ganzes skaliert werden, um Sollastigmatismusvorgaben für eine andere Addition zu erhalten. So kann z.B. die in Fig. 2 gezeigte Sollastigmatismusverteilung als Ganzes mit dem Faktor 0,3 skaliert werden, um von der ursprünglichen Addition von 2,5 dpt zu einer neuen Addition von 0,75 zu kommen. Dadurch ergibt sich ein temporaler maximaler Astigmatismus von 1.508*0.3 = 0.45. Die zusätzlich in Abhängigkeit von der Addition skalierte Sollastigmatismusverteilung ist in **Fig. 3** gezeigt.

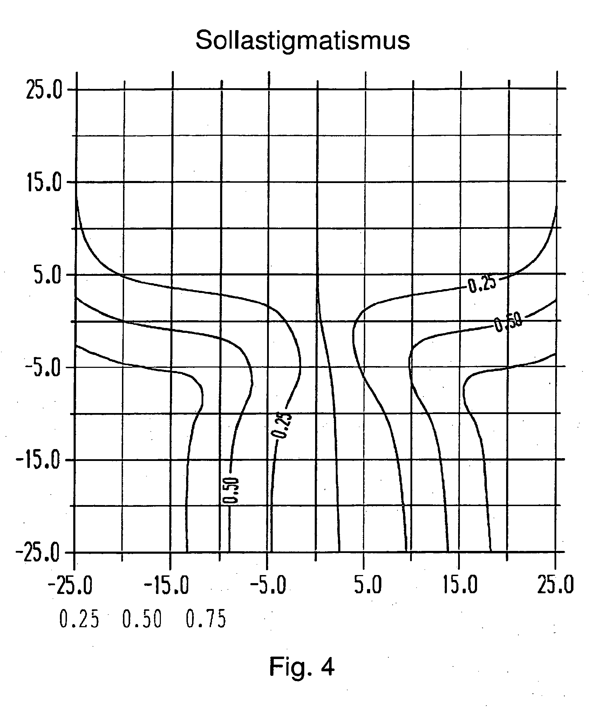

**Fig. 4** zeigt ein Vergleichsbeispiel einer Sollastigmatismusverteilung, welche aus der in Fig. 1 gezeigten Sollastigmatismusverteilung mittels einer (globalen) Skalierung in Abhängigkeit von der Addition (wie in DE 10 2008 015 189 beschrieben) erhalten wird. Das in Fig. 4 gezeigte Beispiel entspricht einer Umskalierung der Start-Sollastigmatismusverteilung von der ursprünglichen Addition von 2,5 dpt auf eine neue Addition von 0,75 dpt.

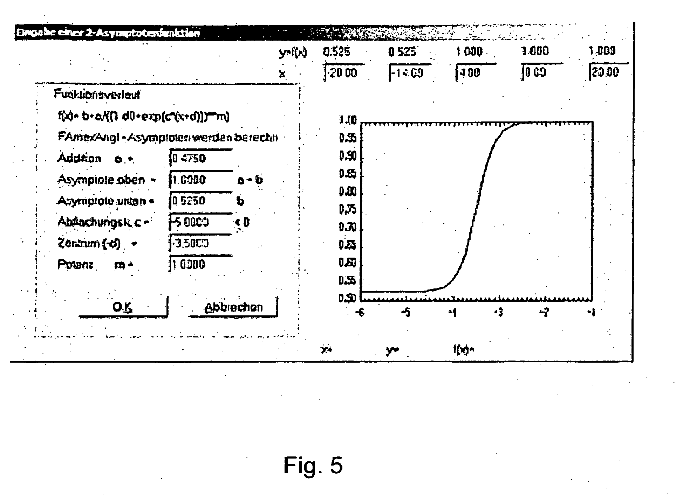

**Fig. 5** zeigt einen Abschnitt einer graphischen Benutzerschnittstelle, welche es ermöglicht, den Vorfaktor $v$ festzulegen. Wie oben beschrieben kann der asymptotische Vorfaktor $v$ z.B. in Abhängigkeit von der mittleren Fernwirkung durch eine Doppelasymptotenfunktion (vgl. Gleichung 7) mit den Parametern $a = 0,475$; $b = 0,525$; $c = -5,0$; $d = 3,5$ und $m = 1$ vorgegeben werden.

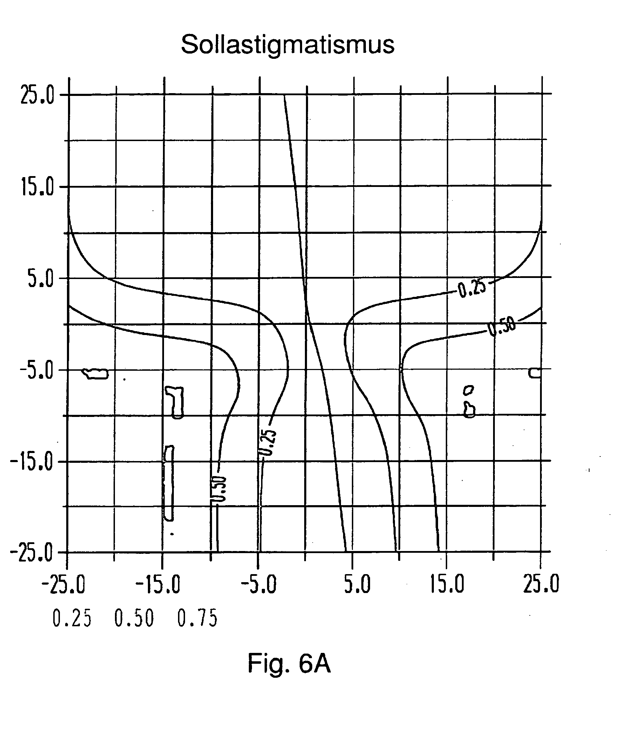

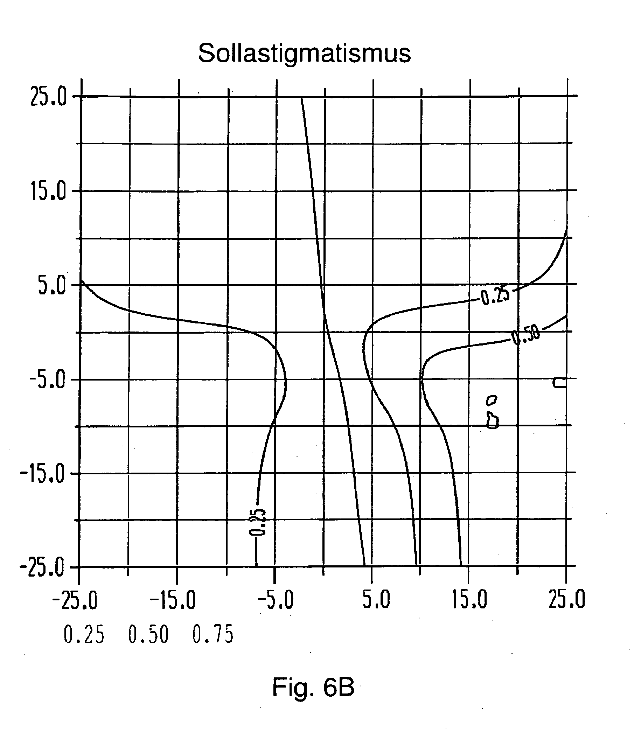

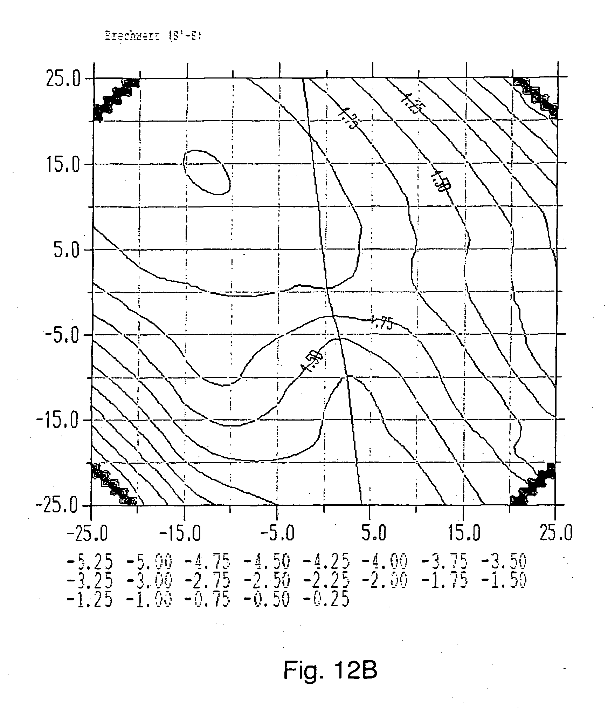

**Figuren 6A, B bis 12A, B** zeigen die Veränderung der Sollvorgaben bei einer beispielhaften Transformation der temporalen Sollastigmatismusverteilung (Fig. 6A und 6B) sowie die Veränderung der Ergebnisse der Optimierung eines progressiven Brillenglases nach den jeweiligen Sollastigmatismusvorgaben. Die Parameter der Verordnung sind:

- Sphäre (Sph) = -8 dpt;
- Zylinder (Cyl) = 6 dpt;
- Achse 45°;
- Addition 0,75 dpt.

Der Verkippungswinkel, welcher bei flachen Basiskurven näherungsweise dem Fassungsscheibenwinkel entspricht, beträgt 5°.

Nach den oben beschriebenen Formeln (7) bis (14) ergibt sich ein Faktor $k$ mit einem Wert von 0,58.

**Fig. X-A** (X = 6, 7, ...12) beziehen sich auf ein Vergleichsbeispiel mit einer symmetrischen Sollastigmatismusverteilung ("Start-Sollastigmatismusverteilung"). **Fig. X-B** (X = 6, 7, ..., 12) beziehen sich auf ein Ausführungsbeispiel gemäß einem Aspekt der Erfindung ("Manipulierte Sollvorgaben) mit einer nicht symmetrischen Sollastigmatismusverteilung.

Die in **Fig. 6B** gezeigte Sollastigmatismusverteilung ist aus der in **Fig. 6A** gezeigten symmetrischen Sollastigmatismusverteilung durch eine Multiplikation des temporalen Sollastigmatismus mit dem Faktor $k = 0,58$ und einer anschließenden Interpolation der Sollastigmatismuswerte erzeugt worden. Die Interpolation erfolgt nach dem in DE 10 2009 005 206 oder DE 10 2009 005 214 offenbarten Kegelstumpfmodel für den peripheren Astigmatismus. Der nasale Sollastigmatismus ist von dieser Änderung nicht betroffen. Folglich ist der maximale temporale Sollastigmatismus um den Faktor 0,58 geringer als der maximale nasale Sollastigmatismus.

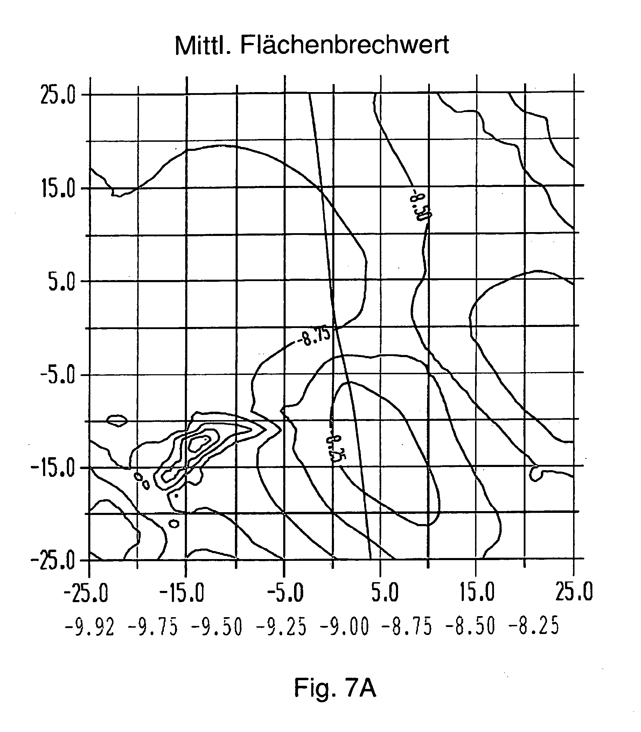

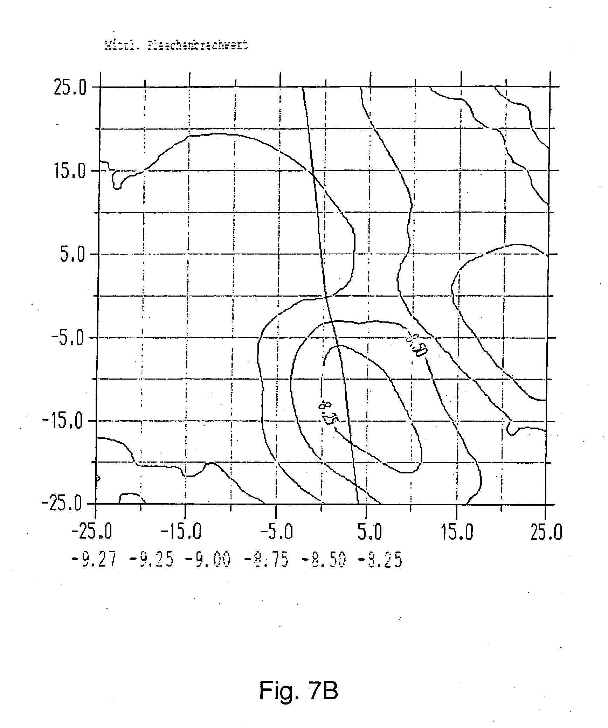

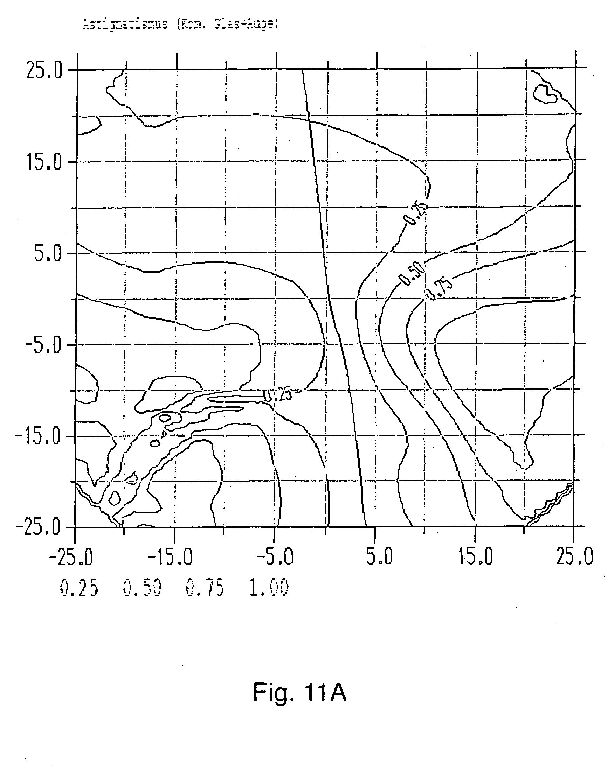

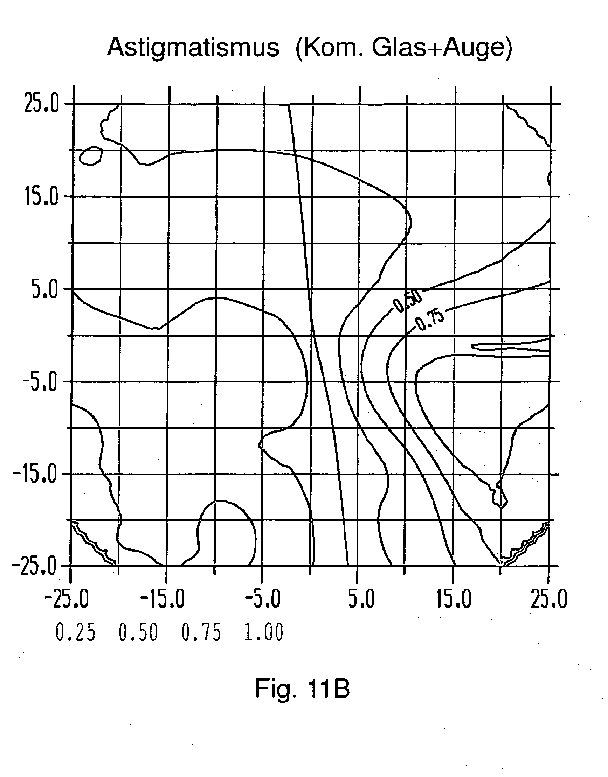

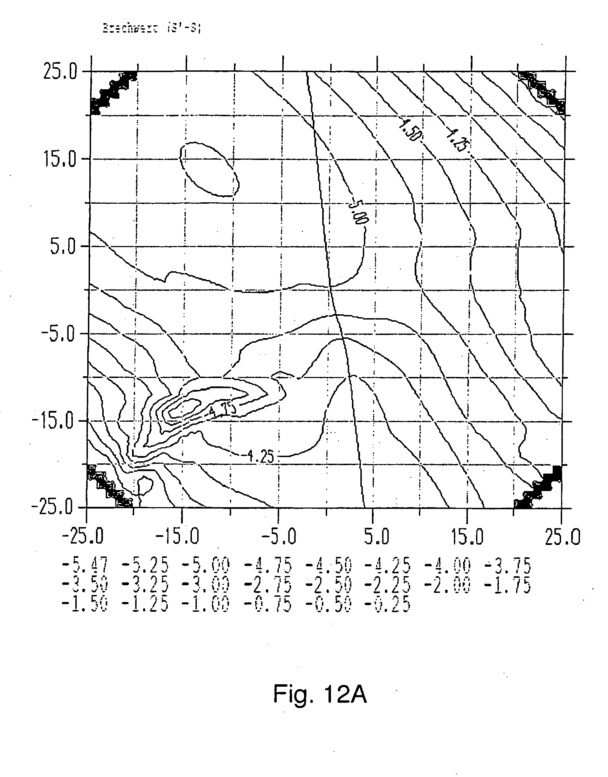

**Fig. 7A bis 10A** zeigen die Flächeneigenschaften der progressiven Fläche eines Brillenglases, welches nach den in Fig. 6A gezeigten symmetrischen Sollastigmatismusvorgaben optimiert worden ist. **Fig. 7B bis 10B** zeigen die Flächeneigenschaften der progressiven Fläche eines Brillenglases, welches nach den in Fig. 6B gezeigten asymmetrischen, manipulierten Sollvorgaben optimiert worden ist. Fig. 11A, B und 12A, B zeigen jeweils den Astigmatismus (Fig. 11A, B) und den Brechwert (Fig. 12A, B) in Gebrauchsstellung des jeweiligen progressiven Brillenglases. Die nachfolgende **Tabelle 1** fasst die in den Figuren 6A, B bis 12A, B gezeigten Sollvorgaben und Eigenschaften einer nach den jeweiligen Sollvorgaben optimierten progressiven Fläche zusammen.

**Tabelle 1**

| Gezeigte Eigenschaft | Symmetrische Sollvorgaben | Manipulierte Sollvorgaben |
|---|---|---|
| Sollastigmatismus [dpt] | Fig. 6A | Fig. 6B |
| Flächenbrechwert der progressiven Fläche [dpt] | Fig. 7A | Fig. 7B |
| Flächenbrechwertgradient der progressiven Fläche [dpt/mm] | Fig. 8A | Fig. 8B |
| Flächenastigmatismus der progressiven | Fig. 9A | Fig. 9B |
| Fläche [dpt] | | |
| Flächenastigmatismusgradient der progressiven Fläche [dpt/mm] | Fig. 10A | Fig. 10B |
| Gebrauchsstellungsastigmatismus [dpt] | Fig. 11A | Fig. 11B |
| Mittlerer Brechwert in Gebrauchsstellung [dpt] | Fig. 12A | Fig. 12B |

Bei einem Vergleich der Figuren 6A und 6B ist die Asymmetrie der in Fig. 6B gezeigten manipulierten Sollastigmatismusverteilung deutlich zu erkennen. In Fig. 6B ist der temporale Sollastigmatismus unter 0,5 dpt.

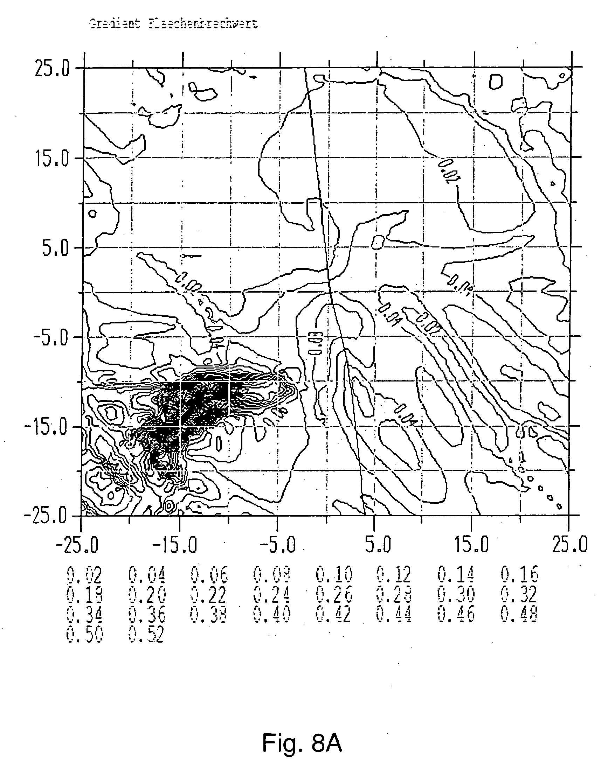

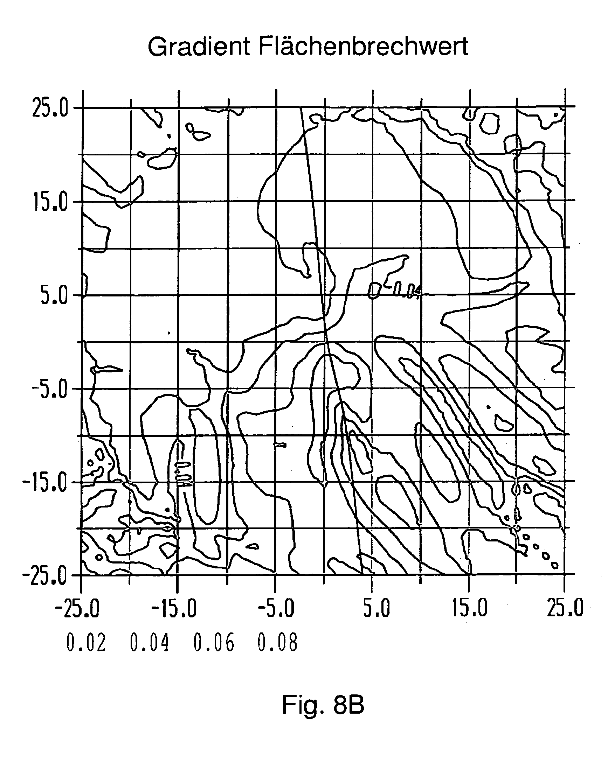

Die progressive Fläche des Brillenglases, welches gemäß den in Fig. 6B gezeigten manipulierten Sollvorgaben optimiert worden ist, weist temporal deutlich geringere Flächenbrechwertänderungen auf (siehe auch Fig. 8A und Fig. 8B). So ist bei einem Vergleich der in Fig. 8A und Fig. 8B gezeigten Gradienten des Flächenbrechwerts der progressiven Fläche deutlich zu erkennen, dass die gemäß den manipulierten Sollastigmatismusvorgaben optimierte progressive Fläche temporal an derselben Stelle wesentlich geringere Gradienten aufweist als die gemäß den symmetrischen Sollastigmatismusvorgaben optimierte Fläche. Die Gradienten sind in diesem Beispiel um einen Faktor 5 geringer.

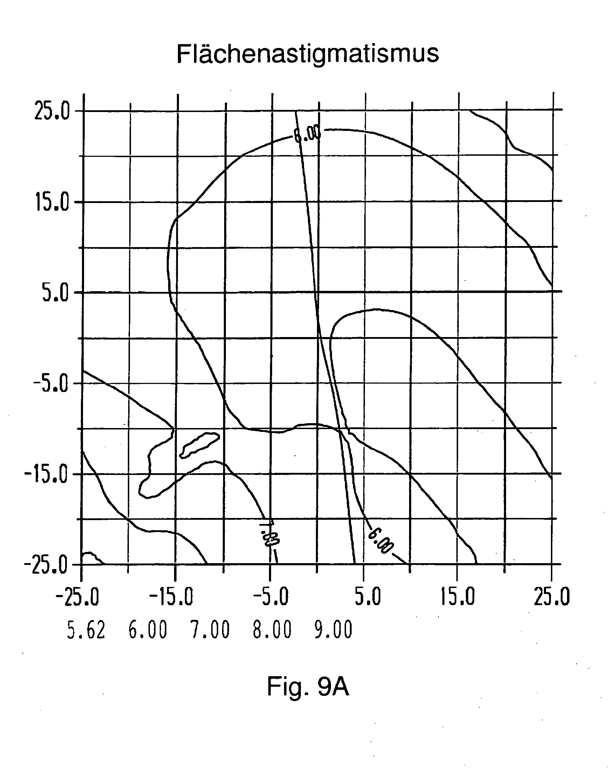

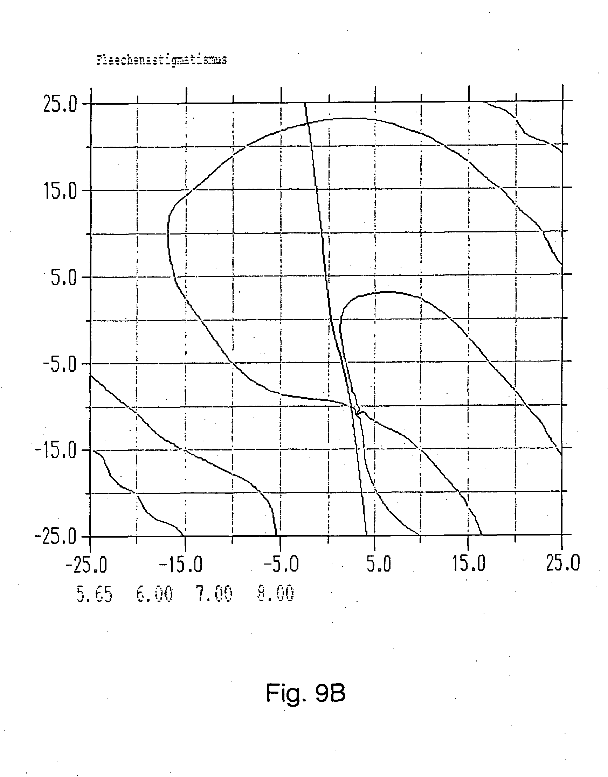

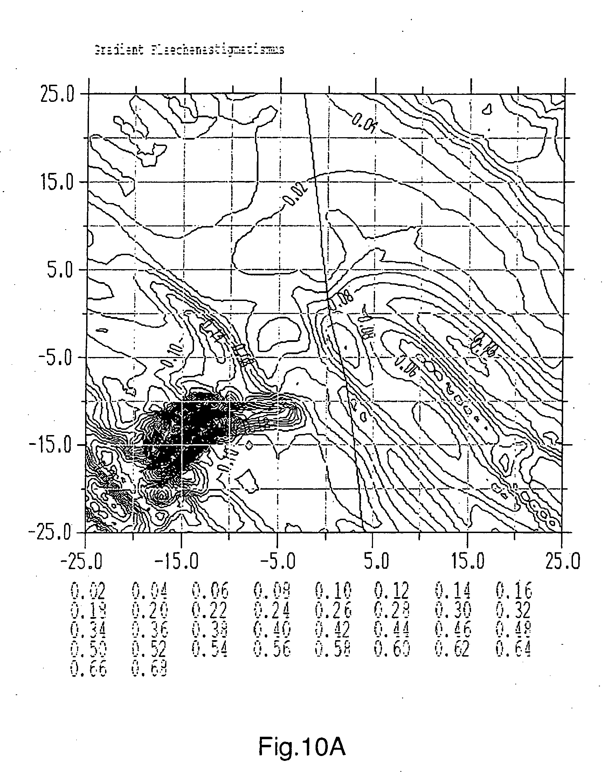

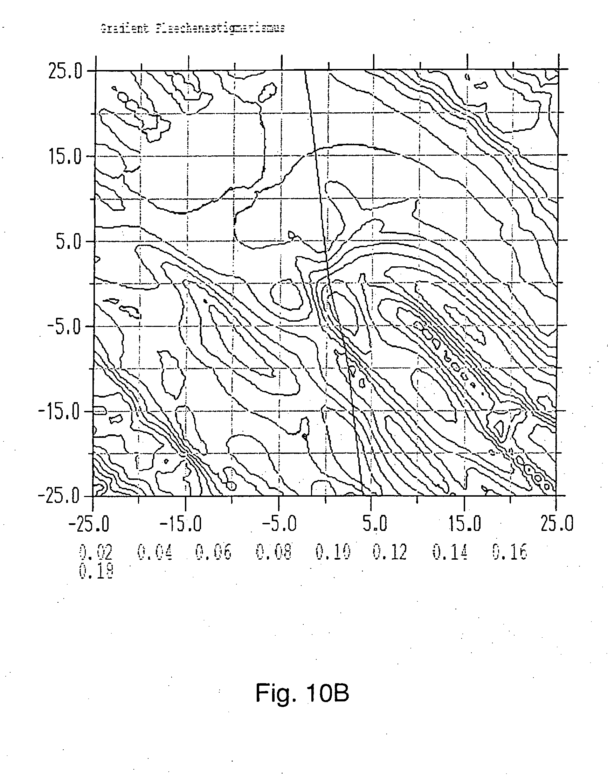

Ferner ist bei einem Vergleich der Figuren 9A und 9B mit den Figuren 10A und 10B zu erkennen, dass die gemäß den manipulierten Sollastigmatismusvorgaben optimierte progressive Fläche temporal deutlich geringere Änderungen des Flächenastigmatismus und somit deutlich geringere Gradienten des Flächenastigmatismus aufweist als die gemäß den symmetrischen Sollastigmatismusvorgaben optimierte Fläche. Die Gradienten sind in diesem Beispiel um einen Faktor 4,5 geringer.

Ebenfalls sind die Gebrauchsstellungseigenschaften (Astigmatismus und Brechwert in Gebrauchsstellung) des gemäß den manipulierten Sollastigmatismusvorgaben optimierten Brillenglases deutlich gradientenärmer, wobei sich die zentralen Sehbereiche nicht wesentlich in ihrer Größe und Nutzbarkeit unterscheiden. In dem konkreten Beispiel ändern sich die Gradienten von 0,45 dpt/mm zu 0,05 dpt/mm. Bei dem mittleren Brechwert in Gebrauchsstellung wird eine Reduktion von 0,55 dpt/mm (vgl. Fig. 12A) auf 0,15 dpt/mm (vgl. Fig. 12B) erzielt werden.

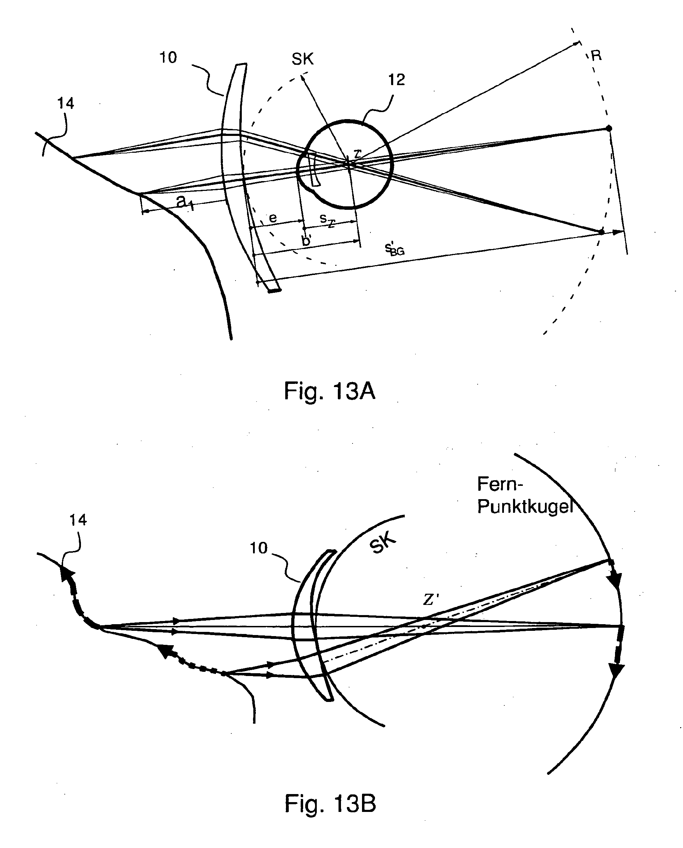

Figuren **13A und 13B** zeigen schematisch die Abbildung von Objekten in unterschiedlichen Objektentfernungen (Objektabständen) durch ein Brillenglas 10. Das Brillenglas 10 ist in einer vorgegebenen Gebrauchsstellung vor den Augen 12 des Brillenträgers angeordnet. In Fig. 13A und 13B bezeichnen:

a1= 1/$A_1$    die Objektentfernung (den Objektabstand);
e           den Hornhautscheitelabstand (HSA);
b'         den Augendrehpunktabstand;
$s_{z'}$        den Abstand Hornhautscheitel - Augendrehpunkt;
$s'_{BG}$      die Bildentfernung;
Z'         den Augendrehpunkt;
R          die Fernpunktkugel; und
SK        die Scheitelpunktkugel.

Die Berechnung bzw. Optimierung des Brillenglases 10 erfolgt komplett in der Gebrauchsstellung des Brillenglases 12, d.h. unter Berücksichtigung der vorgegebenen Anordnung des Brillenglases vor den Augen 12 des Brillenträgers (definiert durch den Hornhautscheitelabstand, Vorneigung, etc.) und eines vorgegebenen Objektabstandmodells. Das Objektabstandsmodell kann die Vorgabe einer Objektfläche 14 umfassen, welche verschiedene Objektabstände oder Objektbereiche für foveales Sehen festlegt. Die Objektfläche 14 wird vorzugsweise durch die Vorgabe der reziproken Objektentfernung (des reziproken Objektabstands) $A_1(x, y)$ entlang der objektseitigen Hauptstrahlen definiert. Der Verlauf der reziproken Objektentfernung $A_1 (x = x_0, y) = A_1 (u = 0, y)$ entlang der Hauptblicklinie (d.h. bei $x = x_0$ bzw. $u = 0$) stellt die Objektabstandsfunktion dar. Die Objektabstandsfunktion. $A_1$ ($x = x_0$, $y$) = $A_1$ ($u = 0$, $y$) bestimmt die Breite der Sehbereiche in der Umgebung der Hauptblicklinie (Satz von Minkwitz). Ein Punkt auf der Objektfläche wird vom Brillenglas auf die Fernpunktkugel abgebildet, wie in Fig. 13A und 13B schematisch gezeigt. Bei dem in Fig. 13A und 13B gezeigten Beispiel ist die augenseitige Fläche des Brillenglases 10 die zu optimierende, progressive Fläche.

Gemäß einem ersten Beispiel wird die Objektabstandsfunktion $A_1$($y$) als Summe zweier Doppelasymptotenfunktionen dargestellt. Fig. 14A und 14B zeigen eine beispielhafte Start-Objektabstandsfunktion $A_{1G}$($y$) (gestrichelte Linie) und eine transformierte, an die neuen Objektabstände angepasste Objektabstandsfunktion $A_1$($y$) (durchgezogene Linie), welche mittels einer Überlagerung der Start-Objektabstandsfunktion $A_1$($y$) mit einer Korrekturfunktion $A_{1Korr}$($y$) (strichpunktierte Linie) erhalten ist.

Die Parameter der Start-Objektabstandsfunktion (welche durch eine Doppelasymptotenfunktion beschrieben wird) sind $a_G$ = 2,606 dpt, $b_G$ = -2,588 dpt, $c$ = -0,46/mm, $d$ = 2,2 mm und $m$= 0,75.

In diesem Fall ist der Fernbezugspunkt DF (Designpunkt Ferne) bei $y$ = +8 mm ($y_{DF}$ = 8 mm) und der Nahbezugspunkt DN (Designpunkt Nähe) bei $y$ = -12 mm ($y_{DN}$ = -12 mm). Die Objektentfernung im Fernbezugspunkt ist unendlich und folglich $A_{1Ferne}$ = $A_{1G}$($y_{DF}$) = 0,00 dpt. Die Objektentfernung im Nahbezugspunkt ist - 40 cm und folglich $A_{1Nähe}$ = $A_{1G}$ ($y_{DN}$) = -2,50 dpt.

Die Objektentfernungen im Fern- und Nahbezugspunkte für einen bestimmten Brillenträger oder für andere Designs und Anwendungen können jedoch von dem obigen Standardmodell abweichen. Beispielsweise kann im Fernbezugspunkt DF eine Objektentfernung von -400 cm und im Nahbezugspunkt eine Objektentfernung von -50 cm berücksichtigt werden. Für diesen Fall sind die abgeänderten Sollvorgaben für die Objektentfernungen in den Fern- und Nahbezugspunkten $A_{1Ferne}$ = $A_{1G}$ ($y_{DF}$) = -0,25 dpt und $A_{1Nähe}$ = $A_{1G}$($y_{DN}$) = -2,00 dpt.

Durch eine Überlagerung der Start-Objektabstandsfunktion $A_{1G}$($y$) mit einer Korrekturfunktion $A_{1Korr}$ ($y$) mit den gleichen Koeffizienten $c$ , $d$ und $m$ wie die der Start-Objektabstandsfunktion und mit den Koeffizienten $b_{korr}$ = 0,526 und $a_{korr}$ = -0,782, ergibt sich der in Fig. 14B gezeigte angepasste Verlauf der Objektabstandsfunktion $A_1$ ($y$).

**Fig. 15A** zeigt eine weitere beispielhafte Start-Objektabstandsfunktion $A_{1G}$($y$). Fig. **15B** zeigt die Steigung der Start-Objektabstandsfunktion (d.h. die Ableitung der Start-Objektabstandsfunktion nach $y$). Die Start-Objektabstandsfunktion wird durch eine Doppelasymptotenfunktion mit den Koeffizienten $a_G$ = 2,100; $b_G$ = 2,801; $c$ = 0,206; $d$ = 5,080; $m$ = 0,5 beschrieben. Die Start-Objektabstandsfunktion weist einen sehr weichen Übergang von dem Fern- zum Nahteil auf. In diesem Beispiel ist die reziproke Objektentfernung $A_{1GFerne}$ im Fernbezugspunkt DF (bei $y$ = 10 mm) gleich -1,00 dpt ($A_{1GFerne}$ = -1,00 dpt) und die reziproke Objektentfernung $A_{1GNähe}$ im Nahbezugspunkt DN (bei $y$ = -14 mm) gleich -2,5 dpt ($A_{1GNähe}$ = -2,5 dpt). Die Start-Objektabstandsfunktion beschreibt somit ein Schlauchdesign für ein Nahsichtglas.

**Fig. 15C** zeigt eine beispielhafte Gauss'sche Funktion $A_{1Gauss}$($y$) (d.h. den korrigierenden reziproken Objektabstand entlang der Hauptblicklinie), welche z.B. zur Abänderung der Designcharakteristik eingesetzt werden kann. Die in Fig. 15C gezeigte Gauss'sche Funktion wird durch eine Gauss'schen Glockenkurve $g(y) = g_a + g_b e^{\frac{y-y_0}{\sigma}}$ mit den Koeffizienten $g_a$= 0,00; $g_b$=0,35; $\sigma$= 5,56 und $y_0$= -3,47 beschrieben. **Fig. 15D** zeigt die Steigung (erste Ableitung nach $y$) der in Fig. 15C gezeigten Gauss'schen Glockenkurve.

**Fig. 15E** zeigt eine Objektabstandsfunktion $A_1$($y$) (d.h. den abgeänderten reziproken Objektabstand entlang der Hauptblicklinie), welche durch eine Überlagerung der in Fig. 15A gezeigten Start-Objektabstandsfunktion mit der in Fig. 15C gezeigten Gauss'schen Funktion erhalten wird. **Fig. 15F** zeigt die Steigung (die erste Ableitung nach $y$) der in Fig. 15E gezeigten Objektabstandsfunktion $A_1$($y$). Durch die Überlagerung der Start-Objektabstandsfunktion mit der in Fig. 15C gezeigten Gauss'schen Glockenkurve wird eine abgeänderte Objektabstandsfunktion erhalten, welche insbesondere für ein Bildschirmarbeitsplatz-Brillenglasdesign geeignet ist. Die Steigung der abgeänderten Objektabstands-funktion $A_1$($y$) weist ein Maximum bei $y$ = -7 mm auf, d.h. dort ist die Änderung der Objektabstandsfunktion $A_1$($y$) am größten. Dementsprechend befindet sich in der Höhe von $y$ = -7 mm die engste Stelle im Progressionsbereich bezüglich der Sehbereichsbreite, welche z.B. durch die 0,5 dpt Isoastigmatismuslinie definiert wird. In der Höhe von $y$ = 0 mm weist die Steigung der Objektabstandsfunktion $A_1$($y$) ein lokales Minimum auf. In dieser Höhe ist das Sehfeld relativ breit und kann für das Blicken in Bildschirmentfernung genutzt werden.

Die in Fig. 15E gezeigte Objektanstandsfunktion $A_1$($y$) kann ferner an eine geänderte Vorgabe für die Objektentfernungen im Fernbezugspunkt und im Nahbezugspunkt angepasst werden. Eine beispielhafte Anpassung der Objektabstandsfunktion kann durch eine lineare Anpassung erfolgen. Fig. 15G zeigt eine abgeänderte Objektabstands-funktion $A_{1neu}$($y$), welche durch eine lineare Anpassung der in Fig. 15E gezeigten Objektanstandsfunktion $A_1$($y$) an die Vorgabe:

$$A_1(y = 10) = -0{,}50 \text{ dpt}$$

und

$$A_1(y = -14) = -2,50 \text{ dpt}$$

erhalten wurde.

Die abgeänderte bzw. angepasste Objektabstandsfunktion wird nach der Formel $A_{1neu}(y) = c + (1 + m)A_1(y)$ erhalten, wobei c = 0,836 und $m$ = 0,335 gilt.

**Fig. 15H** zeigt die Steigung (Ableitung nach $y$) der in Fig. 15G gezeigten, abgeänderten Objektabstandsfunktion $A_{1neu}(y)$.

**Fig. 16A** zeigt einen Abschnitt einer graphischen Benutzerschnittstelle, wobei der Abschnitt ausgelegt ist, die Start-Objektabstandsfunktion (in dem konkreten Fall eine Start-Objektabstandsfunktion $A_{1G}(y)$ in Form einer Doppelasymptotenfunktion der Form $A_{1G}(y) = b + \dfrac{a}{(1 + e^{c(y+d)m}}$ ) zu visualisieren. Die graphische Benutzerschnittstelle kann ferner einen Abschnitt (nicht in Fig. 16A gezeigt) umfassen, welcher Felder zur Eingabe und gegebenenfalls Veränderung der Koeffizienten der Start-Objektabstandsfunktion aufweist.

**Fig. 16B** zeigt eine graphische Benutzerschnittstelle, welche ausgelegt ist, eine Korrekturfunktion (in dem Fall eine Gauss'schen Glockenkurve der Form $A_{1Gauss} = a_0 + b_0 e^{-\left(\frac{y - y_0}{\sigma}\right)^2}$ ) zu visualisieren. Ferner umfasst die graphische Benutzerschnittstelle einen weiteren Abschnitt mit Eingabefelder/Masken, in welchen die Koeffizienten der Korrekturfunktion jeweils angegeben und gegebenenfalls verändert werden. Durch die Überlagerung mit einer Korrekturfunktion in Form einer Gauss'schen Glockenkurve kann der Zwischenbereich neu gewichtet werden. **Fig. 16C** zeigt eine graphische Benutzerschnittstelle mit einem Abschnitt, welcher ausgelegt ist, die durch Überlagerung der Start-Objektabstandsfunktion mit der Korrekturfunktion zusammengesetzte Objektabstandsfunktion zu visualisieren.

**Fig. 17A und 17B** zeigen jeweils den Verlauf und die Ableitung einer beispielhaften Start-Objektabstandsfunktion (Grundfunktion):

Fig. 17A zeigt den Verlauf der Funktion $A_{1G}(y)$ entlang der Hauptlinie in dpt;

Fig. 17B zeigt die erste Ableitung $\dfrac{dA_{1G}(y)}{dy}$ entlang der Hauptlinie.

In diesem Beispiel sind die Benutzerangaben zu den gewünschten Objektabständen $A_{1Feme}$ = -0,5 dpt auf der Höhe $y_F$ = 12 mm und $A_{1Nähe}$ = -2,75 dpt auf der Höhe $y_N$ = -14 mm. Die Istwerte der Start-Objektabstandsfunktion $A_{1G}(y)$ in den Bezugspunkten ergeben sich zu $A_{1G}(y_F)$ = -0,8896 dpt und $A_1G(y_N)$ = - 2,4721 dpt.

Die in Fig. 17A gezeigte Start-Objektabstandsfunktion wird linear transformiert, wobei sich die Geradenkoeffizienten in Abhängigkeit der geänderten Vorgaben für die Objektabstände im Fern- und Nahbezugspunkt dann zu c = 0,7648 und $m$ = 0,4212 berechnen.

**Fig. 17C und 17D** zeigen den Verlauf und die Ableitung der neuen, transformierten Objektabstandsfunktion $A_1$ ($A_1$ -Funktion), wobei:

Fig. 17C den Verlauf der neuen Objektabstandsfunktion $A_1(y)$ entlang der Hauptlinie auf der Vorderfläche des Brillenglases; und

Fig. 17D die Ableitung $\dfrac{dA_1(y)}{dy}$ der neuen Objektabstandsfunktion $A_1(y)$ entlang der Hauptlinie auf der Vorderfläche des Brillenglases zeigen.

**Fig. 18 und 19** zeigen jeweils eine beispielhafte Maske bzw. eine beispielhafte graphische Benutzerschnittstelle zur Angabe und gegebenenfalls Änderung der Parameter der Objektabstandsfunktion und zur Visualisierung der so berechneten Objektabstandsfunktion.

**Bezugszeichenliste**

10       Brillenglas
12       Auge des Brillenträgers
14       Objektfläche
e         Hornhautscheitelabstand (HSA)
b'       Augendrehpunktabstand
sZ'     Abstand Hornhautscheitel - Augendrehpunkt
s'BG   Bildentfernung
Z'       Augendrehpunkt
R        Fernpunktkugel
SK     Scheitelpunktkugel

**Patentansprüche**

1. Computerimplementiertes Verfahren zum Optimieren eines progressiven Brillenglases, umfassend die Schritte:

   Vorgeben einer Start-Sollastigmatismusverteilung $Ast_{Soll_{start}}$ für das progressive Brillenglas;
   Ermitteln einer transformierten Sollastigmatismusverteilung $Ast_{Soll_{neu}}$ und
   Optimieren des progressiven Brillenglases anhand der transformierten Sollastigmatismusverteilung,
   wobei das Ermitteln einer transformierten Sollastigmatismusverteilung $Ast_{Soll_{neu}}$ die Schritte umfasst
   Multiplizieren des Werts des maximalen temporalen Sollastigmatismus $max\_Ast_{Soll}\_temporal_{start}$ der Start-Sollastigmatismusverteilung $Ast_{soll_{start}}$ mit einem Faktor k:

$$\max\_Ast_{Soll}\_temporal_{neu} = k * \max\_Ast_{Soll}\_temporal_{start},$$

   wodurch sich ein abgeänderter maximaler temporaler Astigmatismus $max\_Ast_{soll}\_temporal_{neu}$ ergibt, wobei der Faktor $k$ eine Funktion zumindest eines Verordnungswerts und/oder zumindest eines Parameters des Brillenglases oder dessen Anordnung vor den Augen des Brillenträgers ist, und
   Transformieren der Start-Sollastigmatismusverteilung $Ast_{Soll_{start}}$ auf Basis des abgeänderten maximalen temporalen Astigmatismus $max\_Ast_{Soll}\_temporal_{neu}$.

2. Verfahren nach Anspruch 1, wobei für den Faktor k gilt:

$$k = (1 - g_{Verordnung} - h),$$

   wobei

   $g_{Verordnung}$ eine Funktion zumindest eines Verordnungswerts ist und
   $h$ eine Funktion zumindest eines Parameters des Brillenglases oder dessen Anordnung vor den Augen des Brillenträgers ist.

3. Verfahren nach Anspruch 1, wobei für den Faktor k gilt:

$$k = v * (1 - g_{Verordnung} - h),$$

   wobei

   $g_{Verordnung}$ eine Funktion zumindest eines Verordnungswerts ist,

h eine Funktion zumindest eines Parameters des Brillenglases oder dessen Anordnung vor den Augen des Brillenträgers ist und

ν ein Vorfaktor ist, welcher eine Funktion der Verordnung und/oder der Basiskurve des Brillenglases und/oder der Krümmung der Rückfläche des Brillenglases ist.

4.  Verfahren gemäß Anspruch 3, wobei der Vorfaktor ν eine Doppelasymptotenfunktion der Fernverordnung und/oder der Basiskurve des Brillenglases und/oder der Krümmung der Rückfläche des Brillenglases ist.

5.  Verfahren gemäß einem der Ansprüche 2 bis 4, wobei $g_{Verordnung}$ eine Funktion des Verordnungsastigmatismus ist:

$$g_{Verordnung} \approx f_{(Verordnungsastigmatismus)} = \frac{Verordnungsastigmatismus}{b},$$

wobei der Parameter $b$ im Bereich 2 bis 6, bevorzugt im Bereich 4 bis 6 liegt.

6.  Verfahren gemäß einem der Ansprüche 2 bis 5, wobei $g_{Verordnung}$ eine Funktion der Zylinderachsenlage ist:

$$g_{Verordnung} \approx f_{(Zylinderachslage)} = a * \sin^3(2 * Zylinderachslage),$$

wobei der Parameter $a$ im Bereich von 0,05 bis 1,0, vorzugsweise im Bereich 0,3 bis 0,6 liegt.

7.  Verfahren gemäß einem der Ansprüche 2 bis 6, wobei $g_{Verordnung}$ eine lineare Funktion der Addition ist:

$$f_{(Addition)} = c * Addition + d,$$

wobei der Parameter c im Bereich zwischen 0 und -1, vorzugsweise zwischen -0,75 und -0,3 liegt, und der Parameter $d$ im Bereich von 2,0 bis 0, vorzugsweise im Bereich zwischen 2 und 1 liegt.

8.  Verfahren gemäß einem der Ansprüche 2 bis 7, wobei h eine Funktion des Verkippungswinkels des Brillenglases ist:

$$h \approx f_{(Verkippungswinkel)} = \frac{Verkippungswinkel}{g},$$

wobei der Parameter g im Bereich 50 bis 500, vorzugsweise im Bereich von 100 bis 300 liegt.

9.  Verfahren gemäß einem der vorangegangenen Ansprüche, wobei das Transformieren der Start-Sollastigmatismus-verteilung $Ast_{Sollstart}$ auf Basis des abgeänderten maximalen temporalen Astigmatismus $max\_Ast_{Soll}\_temporal_{neu}$ eine Interpolation der Sollastigmatismuswerte zwischen einer vorgegebenen Basis-Sollisoastigmatismuslinie und der Peripherie des Brillenglases unter Berücksichtigung des abgeänderten maximalen temporalen Astigmatismus $max\_Ast_{Soll}\_temporal_{neu}$ umfasst.

10. Computerprogrammerzeugnis, welches ausgelegt ist, wenn geladen und ausgeführt auf einem Computer, ein Verfahren zum Optimieren eines progressiven Brillenglases nach einem der Ansprüche 1 bis 9 durchzuführen.

11. Speichermedium mit darauf gespeichertem Computerprogramm, wobei das Computerprogramm ausgelegt ist, wenn geladen und ausgeführt auf einem Computer, ein Verfahren zum Optimieren eines progressiven Brillenglases nach einem der Ansprüche 1 bis 9 durchzuführen.

12. Vorrichtung zum Optimieren eines progressiven Brillenglases umfassend Optimierungsmittel, welche ausgelegt sind, ein Optimieren des Brillenglases nach dem Verfahren gemäß einem der Ansprüche 1 bis 9 durchzuführen.

**13.** Verfahren zum Herstellen eines progressiven Brillenglases umfassend:

- Optimieren des Brillenglases nach dem Verfahren gemäß einem der Ansprüche 1 bis 9,
- Bereitstellen von Flächendaten des berechneten bzw. optimierten Brillenglases und
- Fertigen des Brillenglases gemäß den bereitgestellten Flächendaten des Brillenglases.

**14.** Vorrichtung zum Herstellen eines progressiven Brillenglases, umfassend:

- Optimierungsmittel, welche ausgelegt sind, ein Optimieren des Brillenglases nach dem Verfahren gemäß einem der Ansprüche 1 bis 9 durchzuführen; und
- Bearbeitungsmittel zum fertig Bearbeiten des Brillenglases.

**Claims**

**1.** Computer-implemented method for optimisation of a progressive spectacle lens, comprising the steps:

specifying a start reference astigmatism distribution $ast_{ref\ start}$ for the progressive spectacle lens;
determining a transformed reference astigmatism distribution $ast_{ref\ new}$ and
optimising the progressive spectacle lens by means of the transformed reference astigmatism distribution, the determination of a transformed reference astigmatism distribution $ast_{ref\ new}$ comprising the steps
multiplying the value of the maximum temporal reference astigmatism $max\_ast_{ref\_}temporal_{start}$ of the start reference astigmatism distribution $ast_{ref\ start}$ with a factor k:

$$\mathrm{max\_ast}_{ref}\_temporal_{new} = k * \mathrm{max\_ast}_{ref}\_temporal_{start},$$

as a result of which a modified maximum temporal astigmatism $max\_ast_{ref\_}temporal_{new}$ is produced, the factor k being a function of at least one prescription value and/or of at least one parameter of the spectacle lens or the arrangement thereof in front of the eyes of the spectacle wearer, and
transforming the start reference astigmatism distribution $ast_{ref\ start}$ based on the modified maximum temporal astigmatism $max\_ast_{ref\_}temporal_{new}$.

**2.** Method according to claim 1, there applying for the factor *k*:

$$k = (1 - g_{prescription} - h),$$

$g_{prescription}$ being a function of at least one prescription value and
h being a function of at least one parameter of the spectacle lens or the arrangement thereof in front of the eyes of the spectacle wearer.

**3.** Method according to claim 1, there applying for the factor *k*:

$$k = v * (1 - g_{prescription} - h),$$

$g_{prescription}$ being a function of at least one prescription value,
h being a function of at least one parameter of the spectacle lens or the arrangement thereof in front of the eyes of the spectacle wearer and
$v$ being a pre-factor which is a function of the prescription and/or of the basic curve of the spectacle lens and/or of the curvature of the rear-surface of the spectacle lens.

**4.** Method according to claim 3, the pre-factor $v$ being a double asymptotic function of the distance prescription and/or of the basic curve of the spectacle lens and/or of the curvature of the rear-surface of the spectacle lens.

**5.** Method according to one of the claims 2 to 4, $g_{prescription}$ being a function of the prescription astigmatism:

$$g_{prescription} \approx f_{(prescription\ astigmatism)} = \frac{prescription\ astigmatism}{b},$$

the parameter b being in the range 2 to 6, preferably in the range 4 to 6.

**6.** Method according to one of the claims 2 to 5, $g_{prescription}$ being a function of the cylinder axis position:

$$g_{prescription} \approx f_{(cylinder\ axis\ position)} = a * \sin^3(2 * cylinder\ axis\ position),$$

the parameter a being in the range of 0.05 to 1.0, preferably in the range 0.3 to 0.6.

**7.** Method according to one of the claims 2 to 6, $g_{prescription}$ being a linear function of the addition:

$$f_{(addition)} = c * addition + d,$$

the parameter c being in the range between 0 and -1, preferably between -0.75 and -0.3, and the parameter d being in the range of 2.0 to 0, preferably in the range between 2 and 1.

**8.** Method according to one of the claims 2 to 7, h being a function of the tilt angle of the spectacle lens:

$$h \approx f_{(tilt\ angle)} = \frac{tilt\ angle}{g},$$

the parameter g being in the range 50 to 500, preferably in the range of 100 to 300.

**9.** Method according to one of the preceding claims, the transformation of the start reference astigmatism distribution $ast_{ref\ start}$ based on the modified maximum temporal astigmatism $max\_ast_{ref\_}temporal_{new}$ comprising an interpolation of the reference astigmatism values between a prescribed basic reference astigmatism line and the periphery of the spectacle lens taking into account the modified maximum temporal astigmatism $max\_ast_{ref\_}temporal_{new}$.

**10.** Computer programme product which is designed, when loaded and run on a computer, to implement a method for optimisation of a progressive spectacle lens according to one of the claims 1 to 9.

**11.** Storage medium with computer programme stored thereon, the computer programme being designed, when loaded and run on a computer, to implement a method for optimisation of a progressive spectacle lens according to one of the claims 1 to 9.

**12.** Device for optimisation of a progressive spectacle lens comprising optimisation means which are designed to implement an optimisation of the spectacle lens according to the method according to one of the claims 1 to 9.

**13.** Method for the production of a progressive spectacle lens comprising:

- optimising the spectacle lens according to the method according to one of the claims 1 to 9,
- providing surface data of the calculated or optimised spectacle lens and
- manufacturing the spectacle lens according to the provided surface data of the spectacle lens.

**14.** Device for the production of a progressive spectacle lens, comprising:

- optimisation means which are designed to implement an optimisation of the spectacle lens according to the method according to one of the claims 1 to 9; and
- machining means for finish-machining of the spectacle lens.

**Revendications**

1. Procédé mis en oeuvre par ordinateur destiné à l'optimisation d'un verre de lunettes progressif, comprenant les étapes :

de prédéfinition d'une répartition initiale de l'astigmatisme nominal $Ast_{nom/initiale}$ pour le verre de lunettes progressif ;
de détermination d'une répartition transformée de l'astigmatisme nominal $Ast_{nom}/_{transformée}$ et
d'optimisation du verre de lunettes progressif grâce à la répartition transformée de l'astigmatisme nominal,
la détermination d'une répartition transformée de l'astigmatisme nominal $Ast_{nom}/_{transformée}$ comprenant les étapes
de multiplication de la valeur de l'astigmatisme nominal temporal maximal $max\_Ast_{nom}\_temporal_{\_initiale}$ de la répartition initiale de l'astigmatisme nominal $Ast_{nom/initiale}$ avec un facteur k :

$$\mathtt{max\_Ast_{nom}\_temporal_{transform\acute{e}e} = k^{\star}\ max\_Ast_{nom}\_temporal_{initiale,}}$$

par ce moyen, un astigmatisme temporal maximal modifié $max\_Ast_{nom}\_temporal_{nouveau}$ en est dérivé, le facteur k étant une fonction d'au moins une valeur de prescription et/ou d'au moins un paramètre du verre de lunettes ou de sa disposition devant les yeux du porteur de lunettes, et
la transformation de la répartition initiale de l'astigmatisme nominal $Ast_{nom/initiale}$ sur la base de l'astigmatisme temporal maximal modifié $max\_Ast_{nom}\_temporal_{nouveau}$.

2. Procédé selon la revendication 1, où l'on a pour le facteur k, la relation :

$$k = (1 -g_{prescription} - h)$$

$g_{prescription}$ étant une fonction d'au moins une valeur de prescription et
h étant une fonction d'au moins un paramètre du verre de lunettes ou de sa disposition devant les yeux du porteur de lunettes.

3. Procédé selon la revendication 1, où l'on a pour le facteur k, la relation :

$$k = v^{\star}\ (1 - g_{prescription} - h),$$

$g_{prescription}$ étant une fonction d'au moins une valeur de prescription et
h étant une fonction d'au moins un paramètre du verre de lunettes ou de sa disposition devant les yeux du porteur de lunettes et
v étant un pré facteur qui est une fonction de la prescription et/ou de la courbe de base du verre de lunettes et/ou de la courbure de la face arrière du verre de lunettes.

4. Procédé selon la revendication 3, le pré facteur v étant une fonction asymptotique double de la prescription de loin et/ou de la courbe de base du verre de lunettes et/ou de la courbure de la face arrière du verre de lunettes.

5. Procédé selon l'une des revendications 2 à 4, $g_{prescription}$ étant une fonction de l'astigmatisme de prescription :

$$g_{prescription} \approx f_{(astigmatisme\ de\ prescription)} = astigmatisme\ de\ prescription/b,$$

le paramètre b se situant dans un intervalle entre 2 et 6, de préférence, dans l'intervalle 4 à 6.

**6.** Procédé selon l'une des revendications 2 à 5, $g_{prescription}$ étant une fonction de la disposition de l'axe du cylindre :

$$g_{prescription} \approx f_{(disposition\ de\ l'axe\ de\ cylindre)}$$
$$= a^* \sin^3(2^*\ disposition\ de\ l'axe\ de\ cylindre),$$

le paramètre a se situant dans un intervalle entre 0,05 et 1,0, de préférence dans l'intervalle 0,3 à 0,6.

**7.** Procédé selon l'une des revendications 2 à 6, $g_{prescription}$ étant une fonction linéaire de l'addition :

$$f_{(addition)} = c^*\ addition\ +\ d,$$

le paramètre c se situant dans un intervalle entre 0 et -1, de préférence, entre -0,75 et -0,3, et le paramètre d se situant dans l'intervalle entre 2,0 et 0, de préférence, dans l'intervalle entre 2 et 1.

**8.** Procédé selon l'une des revendications 2 à 7, h étant une fonction de l'angle d'inclinaison du verre de lunettes :

$$h \approx f_{(angle\ d'inclinaison)} = angle\ d'inclinaison/g,$$

le paramètre g se situant dans l'intervalle entre 50 et 500, de préférence, dans l'intervalle entre 100 et 300.

**9.** Procédé selon l'une des revendications précédentes, la transformation de la répartition initiale de l'astigmatisme nominal $Ast_{nom/initiale}$ sur la base de l'astigmatisme temporal maximal modifié max_$Ast_{nom\_}temporal_{nouveau}$ comprenant une interpolation des valeurs de l'astigmatisme nominal entre une ligne d'iso astigmatisme nominal de base prédéterminée et la périphérie du verre de lunettes en tenant compte de l'astigmatisme temporal maximal modifié max_$Ast_{nom\_}$ temporalnouveau.

**10.** Résultat d'un programme d'ordinateur qui est conçu, lorsqu'il est chargé et exécuté sur un ordinateur, pour réaliser un procédé destiné à l'optimisation d'un verre de lunettes progressif selon l'une des revendications 1 à 9.

**11.** Support de sauvegarde comprenant un programme d'ordinateur qui y est sauvegardé, le programme d'ordinateur étant conçu, lorsqu'il est chargé et exécuté sur un ordinateur, pour réaliser un procédé destiné à l'optimisation d'un verre de lunettes progressif selon l'une des revendications 1 à 9.

**12.** Dispositif destiné à l'optimisation d'un verre de lunettes progressif comprenant des moyens d'optimisation qui sont conçus pour réaliser une optimisation du verre de lunettes d'après le procédé selon l'une des revendications 1 à 9.

**13.** Procédé destiné à la fabrication d'un verre de lunettes progressif comprenant :

- une optimisation du verre de lunettes d'après le procédé selon l'une des revendications 1 à 9,
- une mise au point de données de surfaces du verre de lunettes calculé, respectivement, optimisé, et
- une fabrication du verre de lunettes en fonction des données de surfaces du verre de lunettes mises au point.

**14.** Dispositif destiné à la fabrication d'un verre de lunettes progressif comprenant :

- des moyens d'optimisation qui sont conçus pour réaliser une optimisation du verre de lunettes d'après le procédé selon l'une des revendications 1 à 9 ; et
- des moyens de fabrication pour le parachèvement du verre de lunettes.

## Sollastigmatismus

Fig. 1

Fig. 2

Fig. 3

## Sollastigmatismus

Fig. 4

Fig. 5

Sollastigmatismus

Fig. 6A

Sollastigmatismus

Fig. 6B

## Mittl. Flächenbrechwert

Fig. 7A

Fig. 7B

Fig. 8A

## Gradient Flächenbrechwert

0.02   0.04   0.06   0.08

Fig. 8B

## Flächenastigmatismus

Fig. 9A

Fleechenastigmatismus

Fig. 9B

Fig.10A

Gradient Flaechenastigmatismus

Fig. 10B

Astigmatismus (Kom. Glas+Auge)

Fig. 11A

# Astigmatismus (Kom. Glas+Auge)

Fig. 11B

Fig. 12A

Fig. 12B

Fig. 13A

Fig. 13B

Reziproker Objektabstand als Doppelasymptotenfunktion

## Fig. 14A

Reziproker Objektabstand als Doppelasymptotenfunktion
$A1(y)=A1G(y)+A1Korr(y)$

## Fig. 14B

Reziproker Objektabstand als Doppelasymptotenfunktion

— —A1DAS(y)

Fig. 15A

Reziproker Objektabstand als Doppelasymptotenfunktion
Steigung (Ableitung nach y)

— —d(A1DAS)/dy

Fig. 15B

Reziproker Objektabstand: Gauss'sche Glockenkurve

— −A1Gauss(y)

## Fig. 15C

Reziproker Objektabstand als Gauss'sche Glockenkurve
Steigung (Ableitung nach y)

— −d(A1Gauss)/dy

## Fig. 15D

Reziproker Objektabstand: Doppelasymptotenfunktion + Gauss

—A1(y)

## Fig. 15E

Reziproker Objektabstand: Doppelasymptotenfunktion + Gauss
Steigung (Ableitung nach y)

—d(A1)/dy

## Fig. 15F

Reziproker Objektabstand: Doppelasymptotenfunktion + Gauss
mit linearer Anpassung an A1Ferne und A1Naehe

Fig. 15G

Reziproker Objektabstand: Doppelasymptotenfunktion + Gauss
mit linearer Anpassung an A1Ferne und A1Naehe
Steigung (Ableitung nach y)

Fig. 15H

**Fig. 16A**

**Fig. 16B**

**Fig. 16C**

A1(y) auf der Vorderflaeche

Fig. 17A

dA1(y)/dy auf der Vorderflaeche

Fig. 17B

A1(y) auf der Vorderflaeche

Fig. 17C

dA1(y)/dy auf der Vorderflaeche

Fig. 17D

**Eingabe einer Geraden**

Parameterwahl

Anpassung für freie Objektentfernung dA1

Gerade durch 2 Punkte

$$A(y) = a0 + a1^*y$$

(a0 = 0.7648 , a1 = 0.4218

| | 1. Punkt | 2. Punkt |
|---|---|---|
| Abszisse | -0.88960 | -2.4721 |
| Ordinate | 0.38960 | -0.2779 |

OK

x=    y=    f(x)=

Fig. 18

EP 2 630 544 B1

Vorgabe der reziproken Objektentfernung

iwahl = 3    A1Typ : 1   4   1   0

N  -14.23   F   119.67   F-N 133.91   ⊙ A1(y)   ○ dA1(y)/dy

A1(y) auf der VorderFlaeche

**Objektabstandsfläche**

☐ 1 Konstantes A1        ☐ 2 A1 = f(y), A1(x)=konst.

☑ 3 A1(y)=DAS, A1(NT)=f(u)   ☐ 4

☑ A1-Anpassung aktiv    Koeffizienten   linear in A1(y)  ▼

☐ A1-Summation zulassen    ☐ A1-Nähe nach Norm (nur DAS)

☑ Gauss1d aktiv        A1-Gauss Koeff.

**Allgemeines**

☑ u0 = HBL_VFL        ☐ HBL aktualisiern

☐ A1-Offset aktiv      A1-Offset

Y1 = -4.165   A1 = -1.361   -73.5   cm   ○ A1(u=20)

reziproker Objektab [dpt]      − − HL    —— HBL

Glockenkurve nach Gauss: A1 Überlagerung [dpl]

| Konstantes A1 | A1 = f(y), A1(x)=kon | Y | 0.000 | 0.014 | 0.159 | 0.525 | 0.490 | 0.129 | 0.010 | 0.000 | 0.000 |
|---|---|---|---|---|---|---|---|---|---|---|---|
| | | X | -25.00 | -18.75 | -12.50 | -6.25 | 0.00 | 6.25 | 12.50 | 18.75 | 25.00 |

Addition   a   2.19970

Konstante   b   -2.87700   Nahl

Abflachung   c   -0.20601   neg

Zentrum   d   -5.08250

Exponent   m   0.50000   posi

$Y = Y0 + dY \cdot EXP(-0.5((X-Xm)/sigma)^2)$

| | | |
|---|---|---|
| Y0 | 0.0000 | Asymptotenwert, a |
| dY | 0.5950 | Y-Hub: Ym - Y0, b |
| Ym | 0.5950 | Y-Wert Zentrum |
| Xm | -3.4694 | X-Wert Zentrum, X0 |
| Sigma | 5.5598 | Verteilungsbreite (>0) |
| delX | 6.5462 | X-Xm für Ym-Y(x)= 0.5 |

Horizontalschnitte : A1(u) im Nal

⊙ Konstant ○ Parabel ○ G

Abnahme von A1 im Nahteil

delta(A1) = 0.500   mm k

Minimales A1 am Rand: A1(R

bkg (2*S

O.K.        Abbrechen

x= -4.56      f(x)=0.58

## Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008015189
- DE 102009005206
- DE 102009005214
- DE 102004059448 A1
- EP 1277079 A2
- WO 2010084019 A
- DE 102009005847